# EUROPEAN PATENT SPECIFICATION

(11) **EP 4 073 141 B1**
(45) Date of publication and mention of the grant of the patent: **18.11.2026**
(21) Application number: 20817375.7
(22) Date of filing: 07.12.2020
(51) Int. Cl.: C08G 63/685, C08G 63/672, C08G 63/48, C08G 63/688, C08G 63/91, C08L 67/02, C08L 67/08, C11D 3/00, C11D 3/37

(54) **POLYESTERS**
POLYESTER
POLYESTERS

(30) Priority: 09.12.2019 EP 19214577
(43) Date of publication of application: 19.10.2022
(73) Proprietor: The Procter & Gamble Company, Cincinnati, OH 45202 (US)
(72) Inventor: GILLISSEN, Martijn, 6351 HD Bocholtz (NL); YAMADA, Hiroe, 60529 Frankfurt am Main (DE); SI, Gang, Newcastle upon Tyne, NE12 9BZ (GB); MCDONNELL, Michael, Newcastle upon Tyne, NE12 9BZ (GB)
(74) Representative: P&G Patent Belgium UK
(86) International application number: PCT/EP2020/084961
(87) International publication number: WO 2021/116049

(56) References cited:
- EP-A1- 0 336 595
- EP-A2- 0 035 263
- US-A- 4 760 100
- US-A- 4 956 447

## Description

The invention relates to polyesters, a process for their preparation and solutions or dispersions comprising the polyesters. The polyesters are particularly suitable for use in fabric treatment applications, such as fabric care and laundry detergent products. In such applications, the polyesters exhibit improved freshness performance and especially good anti-malodor performance.

Consumers use laundry compositions during the laundry process. Such laundry compositions provide cleaning, freshness and/or care benefits to the fabrics during the laundry operation. Recently, a developing need for laundry compositions is ensuring that malodors on fabrics are reduced to a minimum during the laundry process. Malodor is also a growing problem in other consumer product areas. For example, dish washers may generate malodor when consumer washing habits change to lower temperatures and shorter wash cycles. Also, for example, malodor generated on implements, e.g. used in manual dish washing (such as a sponge), becomes a problem for consumers who use an implement in their manual dish washing.

Malodors are typically caused by adherence of soils, especially hydrophobic soils such as body soils, cooking oils, and non-food oils onto surfaces, such as fabrics, and especially onto hydrophobic fabrics.

Therefore, it was the object of the present invention to provide substances which e.g. may be used in fabric care applications such as laundry applications and provide improved freshness performance, and especially good anti-malodor performance.

EP4956447 A relates to cationic polymeric soil release agents.

EP 0035263 A2 relates to polyesters for laundry applications.

Surprisingly, this object may be solved by polyesters comprising
A) one or more structure units of the formula (I) 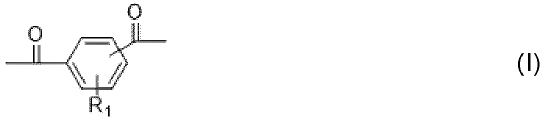 wherein
   R₁ is H or SO₃⁻ $\frac{1}{p}$ M^{p+}, and
   $\frac{1}{p}$ M^{p+} is a cation, preferably selected from the group consisting of monovalent cations M⁺ (p = 1), divalent cations ½ M²⁺ (p = 2) and trivalent cations $\frac{1}{3}$ M³⁺ (p = 3) and more preferably selected from the group consisting of H⁺, Li⁺, Na⁺, K⁺, ½ Mg²⁺, ½ Ca²⁺, $\frac{1}{3}$ Al³⁺, NH₄⁺ and R^{a}R^{b}R^{c}R^{d}N⁺, wherein R^{a}, R^{b}, R^{c} and R^{d}, independently of one another, are H, linear or branched, preferably linear, (C₁-C₂₂)-alkyl groups or linear or branched, preferably linear, (C₂-C₁₀)-hydroxyalkyl groups, and wherein in the cations R^{a}R^{b}R^{c}R^{d}N⁺ at least one of R^{a}, R^{b}, R^{c} and R^{d} is not H, and
B) one or more structure units of the formula (II)

   -O-R₂-O- (II) wherein

   - R₂: is a linear or branched alkylene group represented by the formula (CₘH₂ₘ) wherein m is an integer from 2 to 10, preferably from 2 to 6, and more preferably is 2, 3, 4 or 6, and
C) one or more structure units selected from the group consisting of the formulae (III-a), (III-b), (III-c) and combinations thereof, 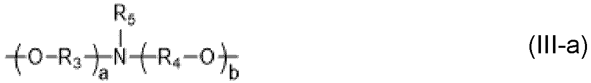 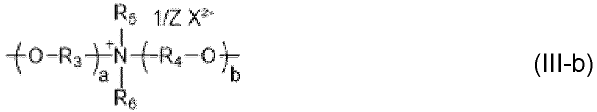 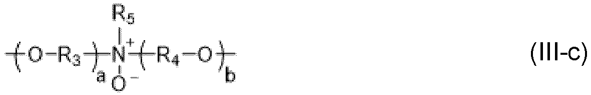 wherein
   R₃ and R₄ are, independently of one another, selected from linear or branched alkylene groups represented by the formula (CₙH₂ₙ) wherein n is 2, 3 or 4,
   R₅ is a group of the formula -(CⱼH₂ⱼO)ₖ-R₉₈, wherein j is 2, 3 or 4, preferably 2, k is, based on a molar average, a number from 0 to 10, preferably from 0 to 5, more preferably from 0 to 2 and even more preferably is 0, and R₉₈ is selected from the group consisting of alkyl, alkenyl, hydroxyalkyl, hydroxyalkenyl, phenyl alkyl, phenyl alkenyl, alkyl phenyl, and alkenyl phenyl, wherein the alkyl and alkenyl groups, either as such or as a part of the aforementioned hydroxyalkyl, hydroxyalkenyl, phenyl alkyl, phenyl alkenyl, alkyl phenyl or alkenyl phenyl groups, contain 6 or more than 6 carbon atoms, preferably from 6 to 30 carbon atoms and more preferably from 6 to 22 carbon atoms,
   R₆ is a group of the formula -(Cⱼ₁H₂ⱼ₁O)ₖ₁-R₉₉, wherein j1 is 2, 3 or 4, preferably 2, k1 is, based on a molar average, a number from 0 to 10, preferably from 0 to 5, more preferably from 0 to 2 and even more preferably is 0, and R₉₉ is selected from the group consisting of hydrogen, alkyl, alkenyl, hydroxyalkyl, hydroxyalkenyl, phenyl alkyl, phenyl alkenyl, alkyl phenyl, and alkenyl phenyl, wherein the alkyl groups, either as such or as a part of the aforementioned hydroxyalkyl, phenyl alkyl or alkyl phenyl groups, contain from 1 to 30 carbon atoms, preferably from 1 to 22 carbon atoms and more preferably from 1 to 6 carbon atoms, and wherein the alkenyl groups, either as such or as a part of the aforementioned hydroxyalkenyl, phenyl alkenyl or alkenyl phenyl groups, contain from 2 to 30 carbon atoms, preferably from 2 to 22 carbon atoms and more preferably from 2 to 6 carbon atoms,
   a and b are, based on a molar average, independently of one another, numbers from 1 to 200, preferably from 1 to 100, more preferably from 1 to 50, even more preferably from 1 to 25, and particularly preferably from 1 to 10, and
   $\frac{1}{z}$ X^{z-} is an anion, preferably selected from the group consisting of monovalent anions X⁻ (z = 1), divalent anions ½ X²⁻ (z = 2) and trivalent anions $\frac{1}{3}$ X³⁻ (z = 3) and more preferably selected from the group consisting of Cl⁻ (chloride), Br⁻ (bromide), CH₃-SO₄⁻ (methyl sulfate), C₂H₅-SO₄⁻ (ethyl sulfate), HCOO⁻ (formate), $\frac{1}{3}$ C(OH)(COO⁻)(CH₂COO⁻)₂ (citrate), CH₃-COO⁻ (acetate), NO₃⁻ (nitrate), ½ CO₃²⁻ (carbonate), ½ SO₄²⁻ (sulfate) and $\frac{1}{3}$ PO₄³⁻ (phosphate), and
or more terminal groups (IV) derived from polyalkyleneglycol monoalkylethers.

Therefore, a subject matter of the present invention is polyesters comprising
A) one or more structure units of the formula (I) 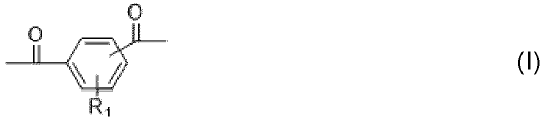 wherein
   R₁ is H or SO₃⁻ $\frac{1}{p}$ M^{p+}, and
   $\frac{1}{p}$ M^{p+} is a cation, preferably selected from the group consisting of monovalent cations M⁺ (p = 1), divalent cations ½ M²⁺ (p = 2) and trivalent cations $\frac{1}{3}$ M³⁺ (p = 3) and more preferably selected from the group consisting of H⁺, Li⁺, Na⁺, K⁺, ½ Mg²⁺, ½ Ca²⁺, $\frac{1}{3}$ Al³⁺, NH₄⁺ and R^{a}R^{b}R^{c}R^{d}N⁺, wherein R^{a}, R^{b}, R^{c} and R^{d}, independently of one another, are H, linear or branched, preferably linear, (C₁-C₂₂)-alkyl groups or linear or branched, preferably linear, (C₂-C₁₀)-hydroxyalkyl groups, and wherein in the cations R^{a}R^{b}R^{c}R^{d}N⁺ at least one of R^{a}, R^{b}, R^{c} and R^{d} is not H, and
B) one or more structure units of the formula (II)

   -O-R₂-O- (II)

   wherein
   - R₂: is a linear or branched alkylene group represented by the formula (CₘH₂ₘ) wherein m is an integer from 2 to 10, preferably from 2 to 6, and more preferably is 2, 3, 4 or 6, and
C) one or more structure units selected from the group consisting of the formulae (III-a), (III-b), (III-c) and combinations thereof; 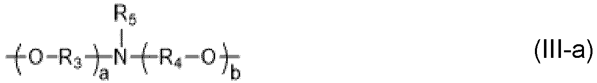 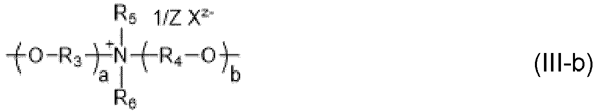 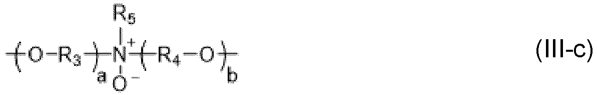 wherein
   R₃ and R₄ are, independently of one another, selected from linear or branched alkylene groups represented by the formula (CₙH₂ₙ) wherein n is 2, 3 or 4,
   R₅ is a group of the formula -(CⱼH₂ⱼO)ₖ-R₉₈, wherein j is 2, 3 or 4, preferably 2, k is, based on a molar average, a number from 0 to 10, preferably from 0 to 5, more preferably from 0 to 2 and even more preferably is 0, and R₉₈ is selected from the group consisting of alkyl, alkenyl, hydroxyalkyl, hydroxyalkenyl, phenyl alkyl, phenyl alkenyl, alkyl phenyl, and alkenyl phenyl, wherein the alkyl and alkenyl groups, either as such or as a part of the aforementioned hydroxyalkyl, hydroxyalkenyl, phenyl alkyl, phenyl alkenyl, alkyl phenyl or alkenyl phenyl groups, contain 6 or more than 6 carbon atoms, preferably from 6 to 30 carbon atoms and more preferably from 6 to 22 carbon atoms,
   R₆ is a group of the formula -(Cⱼ₁H₂ⱼ₁O)ₖ₁-R₉₉, wherein j1 is 2, 3 or 4, preferably 2, k1 is, based on a molar average, a number from 0 to 10, preferably from 0 to 5, more preferably from 0 to 2 and even more preferably is 0, and R₉₉ is selected from the group consisting of hydrogen, alkyl, alkenyl, hydroxyalkyl, hydroxyalkenyl, phenyl alkyl, phenyl alkenyl, alkyl phenyl, and alkenyl phenyl, wherein the alkyl groups, either as such or as a part of the aforementioned hydroxyalkyl, phenyl alkyl or alkyl phenyl groups, contain from 1 to 30 carbon atoms, preferably from 1 to 22 carbon atoms and more preferably from 1 to 6 carbon atoms, and wherein the alkenyl groups, either as such or as a part of the aforementioned hydroxyalkenyl, phenyl alkenyl or alkenyl phenyl groups, contain from 2 to 30 carbon atoms, preferably from 2 to 22 carbon atoms and more preferably from 2 to 6 carbon atoms,
   a and b are, based on a molar average, independently of one another, numbers from 1 to 200, preferably from 1 to 100, more preferably from 1 to 50, even more preferably from 1 to 25, and particularly preferably from 1 to 10, and
   $\frac{1}{z}$ X^{z-} is an anion, preferably selected from the group consisting of monovalent anions X⁻ (z = 1), divalent anions ½ X²⁻ (z = 2) and trivalent anions $\frac{1}{3}$ X³⁻ (z = 3) and more preferably selected from the group consisting of Cl⁻ (chloride), Br⁻ (bromide), CH₃-SO₄⁻ (methyl sulfate), C₂H₅-SO₄⁻ (ethyl sulfate), HCOO⁻ (formate), $\frac{1}{3}$ C(OH)(COO⁻)(CH₂COO⁻)₂ (citrate), CH₃-COO⁻ (acetate), NO₃⁻ (nitrate), ½ CO₃²⁻ (carbonate), ½ SO₄²⁻ (sulfate) and $\frac{1}{3}$ PO₄³⁻ (phosphate), and
one or more terminal groups (IV) derived from polyalkyleneglycol monoalkylethers.

The alkyl groups mentioned in the definition of the groups R₉₈ and R₉₉, either as such or as a part of the hydroxyalkyl, phenyl alkyl or alkyl phenyl groups, may be linear, branched or cyclic. Preferably, these alkyl groups are linear.

The alkenyl groups mentioned in the definition of the groups R₉₈ and R₉₉, either as such or as a part of the hydroxyalkenyl, phenyl alkenyl or alkenyl phenyl groups, may comprise one or more double bonds and may be linear, branched or cyclic. Preferably, these alkenyl groups are linear.

In some embodiments of the invention, the structure units of the formulae (III-a), (III-b), and/or (III-c) have stereoisomers, e.g. in the case when four different groups are bonded to the nitrogen atom contained in these structure units, or when the nitrogen atom in these structure units is restricted in rotation and cannot interconvert. The structure units of the formulae (III-a), (III-b), and (III-c) are intended to cover all possible stereoisomers.

The polyesters of the invention exhibit improved freshness performance and especially good anti-malodor performance. Furthermore, the polyesters of the invention can deliver multiple benefits that consumers desire, such as reducing the adhesion of soil to surfaces (soil release), reducing the adhesion of biological stains or microorganisms to textiles, and promoting the repellency of allergens from a surface. The inventive polyesters have no obvious amine smell.

The invention also provides the benefit of easy process control when synthesizing the inventive polyesters.

In EP 0 398 137 A2 rinse-added fabric conditioning compositions containing fabric softening agents and cationic soil release polymers are disclosed.

In the case that one molecule of the polyesters of the invention comprises two or more of the structure units of the formula (I), the definitions of R₁ and of the cation $\frac{1}{p}$ M^{p+} and the binding positions of the different groups -(CO)- and R₁ relative to each other may vary between those structure units.

The one or more structure units of the formula (I) of the polyesters of the invention are derived from aromatic diacids or their salts or their dialkylesters, such as, terephthalic acid, phthalic acid, isophthalic acid, 5-sulfoisophthalic acid, 3-sulfophthtalic acid, 4-sulfophthtalic acid or their salts or their dialkyl esters, preferably their (C₁-C₄)-dialkyl esters and more preferably their dimethyl esters, or mixtures thereof. In case R₁ in the one or more structure units of the formula (I) is SO₃⁻ $\frac{1}{p}$ M^{p+}, the cation $\frac{1}{p}$ M^{p+} preferably is Na⁺.

Preferably, R₁ in the one or more structure units of the formula (I) of the polyesters of the invention is H.

Preferably, in the one or more structure units of the formula (I) of the polyesters of the invention, the binding positions of the two groups -(CO)- relative to each other is "para".

More preferably, the one or more structure units (I) of the polyesters of the invention are derived from terephthalic acid or its dialkyl esters, preferably its (C₁-C₄)-dialkyl esters and more preferably its dimethyl esters.

Preferably, the number of structure units of the formula (I) in the inventive polyesters is, on a molar average, from 2 to 30, more preferably from 3 to 22 and even more preferably from 3 to 12.

In addition to the one or more structure units of the formula (I) further structure units derived from other di- or polycarboxylic acids or their salts or their (di)alkylesters can be used in the polyesters of the invention, such as, naphthalene-1,4-dicarboxylic acid, naphthalene-2,6,-dicarboxylic acid, tetrahydrophthalic acid, trimellitic acid, diphenoxyethane-4,4'-dicarboxylic acid, diphenyl-4,4'-dicarboxylic acid, 2,5-furandicarboxylic acid, adipic acid, sebacic acid, decan-1,10-dicarboxylic acid, fumaric acid, succinic acid, 1,4-cyclohexanedicarboxylic acid, cyclohexanediacetic acid, glutaric acid, azelaic acid, or their salts or their (di)alkyl esters, preferably their (C₁-C₄)-(di)alkyl esters and more preferably their (di)methyl esters, or mixtures thereof. Typically, such further structure units derived from other di- or polycarboxylic acids or their salts or their (di)alkylesters would be present to a minor extent, for example in an amount smaller than 5 wt.-%, based on the total weight of the polyester of the invention.

In the case that one molecule of the polyesters of the invention comprises two or more of the structure units of the formula (II), the definition of R₂ may vary between those structure units.

The one or more structure units of the formula (II) of the polyesters of the invention are preferably derived from glycols, and more preferably from ethyleneglycol, 1,2-propyleneglycol, 1,3-propyleneglycol, 2-methyl-1,3-propanediol, 1,4-butanediol, 1,3-butanediol, 2,3-butanediol, 1,2-butanediol, 2,2-dimethyl-1,3-propanediol, 1,2-pentanediol, 1,5-pentanediol, 1,2-hexanediol, 1,6-hexanediol or mixtures thereof.

Even more preferably, R₂ in the one or more structure units of the formula (II) of the polyesters of the invention is selected from the group consisting of (C₂H₄), (C₃H₆) and mixtures thereof, and particularly preferably is (C₃H₆).

In the case that one molecule of the polyesters of the invention comprises two or more of the structure units of the formula (III-a) and/or two or more of the structure units of the formula (III-b) and/or two or more of the structure units of the formula (III-c), the definitions of R₃, R₄, R₅, R₆, a, b and $\frac{1}{z}$ X^{z-} may vary between those structure units.

The one or more structure units of the formula (III-a) of the polyesters of the invention, the one or more structure units of the formula (III-b) of the polyesters of the invention and the one or more structure units of the formula (III-c) of the polyesters of the invention are preferably derived from amine alkoxylates.

Preferably, R₃ and R₄ in the one or more structure units of the formula (III-a) of the polyesters of the invention and/or in the one or more structure units of the formula (III-b) of the polyesters of the invention and/or in the one or more structure units of the formula (III-c) of the polyesters of the invention are (C₂H₄).

In a preferred embodiment of the invention, a and b in the one or more structure units of the formula (III-a) of the polyesters of the invention and/or in the one or more structure units of the formula (III-b) of the polyesters of the invention and/or in the one or more structure units of the formula (III-c) of the polyesters of the invention are 1.

Examples of the alkyl and alkenyl groups R₉₈ in the one or more structure units of the formula (III-a) and/or the one or more structure units of the formula (III-b) and/or the one or more structure units of the formula (III-c) are, for example, linear, branched or cyclic hexyl, heptyl, octyl (e.g. capryl), nonyl, decyl, undecyl, dodecyl, tridecyl, tetradecyl, pentadecyl, hexadecyl, heptadecyl, octadecyl, nonadecyl, icosyl, henicosyl, docosyl, tricosyl, tetraicosyl, pentaicosyl, hexaicosyl, heptaicosyl, octaicosyl, nonaicosyl, triacontyl, hexenyl, heptenyl, octenyl, nonenyl, decenyl, dodecenyl, tetradecenyl, hexadecenyl, octadecenyl, octadecadienyl, octadecatrienyl, eicosenyl, eicosadienyl, eicosatetraenyl, docosenyl, docosahexaenyl, tetracosenyl, or mixtures thereof.

Examples of the hydroxy alkyl and hydroxy alkenyl groups R₉₈ in the one or more structure units of the formula (III-a) and/or the one or more structure units of the formula (III-b) and/or the one or more structure units of the formula (III-c) are, for example, hydroxy hexyl, hydroxy heptyl, hydroxy octyl, hydroxy nonyl, hydroxy decyl, hydroxy undecyl, hydroxy dodecyl, hydroxy docosyl, hydroxy hexenyl, hydroxy heptenyl, hydroxy octenyl, hydroxy nonenyl, hydroxy decenyl, hydroxy dodecenyl, hydroxy docosenyl, or mixtures thereof.

"Phenyl alkyl" (or "phenyl alkylene") or "phenyl alkenyle" (or "phenyl alkenylene") groups according to the present invention are groups that are bound via their respective alkyl (or alkylene) or alkenyl (or alkenylene) group to the rest of the molecule. In contrast thereto, "alkyl phenyl" (or "alkyl phenylene") or "alkenyl phenyl" (or "alkenyl phenylene") groups according to the present invention are groups that contain an alkyl or an alkenyl group but are bound via their respective phenyl (or phenylene) group to the rest of the molecule.

Examples of the phenyl alkyl and phenyl alkenyl groups R₉₈ in the one or more structure units of the formula (III-a) and/or the one or more structure units of the formula (III-b) and/or the one or more structure units of the formula (III-c) are, for example, phenyl hexyl, phenyl heptyl, phenyl octyl, phenyl nonyl, phenyl decyl, phenyl undecyl, phenyl dodecyl, phenyl hexenyl, phenyl heptenyl, phenyl octenyl, phenyl nonenyl, phenyl decenyl, phenyl dodecenyl, or mixtures thereof.

Examples of the alkyl phenyl and alkenyl phenyl groups R₉₈ in the one or more structure units of the formula (III-a) and/or the one or more structure units of the formula (III-b) and/or the one or more structure units of the formula (III-c) are, for example, hexyl phenyl, heptyl phenyl, octyl phenyl, nonyl phenyl, decyl phenyl, undecyl phenyl, dodecyl phenyl, hexenyl phenyl, heptenyl phenyl, octenyl phenyl, nonenyl phenyl, decenyl phenyl, dodecenyl phenyl, or mixtures thereof.

In one preferred embodiment of the invention the group R₉₈ in the one or more structure units of the formula (III-a) and/or the one or more structure units of the formula (III-b) and/or the one or more structure units of the formula (III-c) of the inventive polyesters is cyclohexyl. In this preferred embodiment of the invention, the variable "k" preferably is 0.

In another preferred embodiment of the invention the group R₉₈ in the one or more structure units of the formula (III-a) and/or the one or more structure units of the formula (III-b) and/or the one or more structure units of the formula (III-c) of the inventive polyesters is n-octyl (capryl). In this preferred embodiment of the invention, the variable "k" preferably is 0.

In another preferred embodiment of the invention at least 10 wt.-%, more preferably at least 30 wt.-% and even more preferably at least 50 wt.-% of the groups R₉₈ in the one or more structure units of the formula (III-a) and/or the one or more structure units of the formula (III-b) and/or the one or more structure units of the formula (III-c) of the inventive polyesters, preferably in case R₉₈ is selected from the group consisting of alkyl, alkenyl, hydroxyalkyl and hydroxyalkenyl and more preferably in case R₉₈ is selected from the group consisting of alkyl and alkenyl, contain 8 or more than 8 carbon atoms, preferably 10 or more than 10 carbon atoms and more preferably 12 or more than 12 carbon atoms, in each case based on the total weight of the groups R₉₈ in the inventive polyesters. In this preferred embodiment of the invention, the variable "k" preferably is 0.

In a more preferred embodiment of the invention the group R₉₈ in the one or more structure units of the formula (III-a) and/or the one or more structure units of the formula (III-b) and/or the one or more structure units of the formula (III-c) of the inventive polyesters is cocoyl. In this preferred embodiment of the invention, the variable "k" preferably is 0.

Preferably, R₉₈ in the one or more structure units of the formula (III-a) of the polyesters of the invention and/or in the one or more structure units of the formula (III-b) of the polyesters of the invention and/or in the one or more structure units of the formula (III-c) of the polyesters of the invention is selected from the group consisting of alkyl, alkenyl and mixtures thereof and wherein the alkenyl groups comprise one or more double bonds, more preferably from the group consisting of linear alkyl, cycloalkyl and linear alkenyl, and mixtures thereof and wherein the linear alkenyl groups comprise one or more double bonds, and even more preferably from the group consisting of linear alkyl and linear alkenyl, and mixtures thereof and wherein the linear alkenyl groups comprise one or more double bonds. In these preferred embodiments of the invention, the variable "k" preferably is 0 and furthermore, in these preferred embodiments of the invention, the alkyl groups and/or alkenyl groups preferably contain from 6 to 22 carbon atoms.

Examples of the alkyl and alkenyl groups R₉₉ in the one or more structure units of the formula (III-b) are, for example, methyl, ethyl, linear, branched or cyclic propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, icosyl, henicosyl, docosyl, tricosyl, tetraicosyl, pentaicosyl, hexaicosyl, heptaicosyl, octaicosyl, nonaicosyl, triacontyl, ethenyl or vinyl, propenyl, butenyl, pentenyl, hexenyl, heptenyl, octenyl, nonenyl, decenyl, dodecenyl, tetradecenyl, hexadecenyl, octadecenyl, octadecadienyl, octadecatrienyl, eicosenyl, eicosadienyl, eicosatetraenyl, docosenyl, docosahexaenyl, tetracosenyl, or mixtures thereof.

Examples of the hydroxy alkyl and hydroxy alkenyl groups R₉₉ in the one or more structure units of the formula (III-b) are, for example, hydroxy methyl, hydroxy ethyl, hydroxy propyl, hydroxy butyl, hydroxy pentyl, hydroxy hexyl, hydroxy ethenyl, hydroxy propenyl, hydroxy butenyl, hydroxy pentenyl, hydroxy hexenyl or mixtures thereof.

Examples of the phenyl alkyl or phenyl alkenyl groups R₉₉ in the one or more structure units of the formula (III-b) are, for example, phenyl methyl (or benzyl), phenyl ethyl, phenyl propyl, phenyl butyl, phenyl pentyl, phenyl hexyl, phenyl ethenyl, phenyl propenyl, phenyl butenyl, phenyl pentenyl, phenyl hexenyl or mixtures thereof.

Examples of the alkyl phenyl or alkenyl phenyl groups R₉₉ in the one or more structure units of the formula (III-b) are, for example, methyl phenyl, ethyl phenyl, propyl phenyl, butyl phenyl, pentyl phenyl, hexyl phenyl, ethenyl phenyl, propenyl phenyl, butenyl phenyl, pentenyl phenyl, hexenyl phenyl or mixtures thereof.

Preferably, R₉₉ in the one or more structure units of the formula (III-b) of the polyesters of the invention is a linear or branched, preferably a linear, alkyl group, more preferably containing from 1 to 4 carbon atoms and even more preferably is methyl. In these preferred embodiments of the invention, the variable "k1" preferably is 0.

The polyesters of the invention further comprise one or more terminal groups (IV) derived from polyalkyleneglycol monoalkylethers, preferably selected from the formula (IV-a)

-O-[C₂H₄-O]_{c}-[C₃H₈-O]_{d}-[C₄H₈-O]ₑ-R₇ (IV-a)

wherein
- R₇: is linear or branched (C₁-C₃₀)-alkyl, preferably linear or branched (C₁-C₄)-alkyl, and more preferably methyl,
- c, d and e: are, based on a molar average, independently of one another, numbers from 0 to 200, the sum of c+d+e is from 2 to 500,
the [C₂H₄-O], [C₃H₆-O] and [C₄H₈-O] groups of the terminal group (IV-a) may be arranged blockwise, alternating, periodically and/or statistically, preferably blockwise and/or statistically, and either of the [C₂H₄-O], [C₃H₆-O] and [C₄H₈-O] groups of the terminal group (IV-a) can be linked to -R₇ and/or -O.

In the case that one molecule of the polyesters of the invention comprises two or more of the terminal groups (IV-a) the definition of R₇, c, d and e may vary between those terminal groups.

In the case that at least two of c, d and e of the terminal group (IV-a) adopt non-zero values, the [C₄H₈-O]-, [C₃H₆-O]- and [C₂H₄-O]-groups may be arranged blockwise, alternating, periodically and/or statistically, preferably blockwise and/or statistically. This means that in the terminal group (IV-a), the groups [C₄H₈-O], [C₃H₆-O] and [C₂H₄-O] may be arranged, for example, in a purely statistically or blockwise form but may also be arranged in a form which could be considered as both statistical and blockwise, e.g. small blocks of [C₃H₆-O] and [C₂H₄-O] arranged in a statistical manner, or in a form wherein adjacent instances of statistical and blockwise arrangements of the groups [C₄H₈-O], [C₃H₆-O] and [C₂H₄-O] exist.

Any of the groups [C₄H₈-O], [C₃H₆-O] and [C₂H₄-O] can be linked to R₇- and -O. This means, for example, that both R₇- and -O may be connected to a [C₄H₈-O]-group, they may both be connected to a [C₃H₆-O]-group, they may both be connected to a [C₂H₄-O]-group or they may be connected to different groups selected from [C₄H₈-O], [C₃H₆-O] and [C₂H₄-O].

Preferably, "c" in formula (IV-a) is, based on a molar average, a number from 0 to 180, more preferably from 2 to 130 and even more preferably from 10 to 130.

Preferably, "d" in formula (IV-a) is, based on a molar average, a number from 0 to 50, more preferably from 0 to 20 and even more preferably "d" is 0.

Preferably, "e" in formula (IV-a) is 0.

More preferably, "d" and "e" in formula (IV-a) are 0.

In a preferred embodiment of the invention the polyester further comprises one or more polyalkyleneglycol-derived structure units (V), preferably selected from the formula (V-a)

-O-[C₂H₄-O]_{f}- (V-a)

wherein
- f: is, based on a molar average, a number from 2 to 500, preferably from 2 to 200, more preferably from 2 to 130 and even more preferably from 10 to 130.

In the one or more polyesters of the invention, the combined amount of the one or more structure units of the formula (I), and the one or more structure units of the formula (II), and the one or more structure units selected from the group consisting of the formulae (IIIa), (III-b), (III-c) and combinations thereof, and the one or more terminal groups (IV) derived from polyalkyleneglycol monoalkylethers, preferably selected from the formula (IV-a), and, if present, the one or more polyalkyleneglycol-derived structure units (V), preferably selected from the formula (V-a), preferably is at least 50 wt.-%, more preferably at least 60 wt.-%, even more preferably at least 70 wt.-% and particularly preferably at least 80 wt.-%, in each case based on the total weight of the polyester.

In a preferred embodiment of the invention the inventive polyesters consist exclusively of one or more structure units of the formula (I), and of one or more structure units of the formula (II), and of one or more structure units selected from the group consisting of the formulae (Illa), (IIIb), (III-c) and combinations thereof, and one or more terminal groups (IV) derived from polyalkyleneglycol monoalkylethers, preferably selected from the formula (IV-a), and, if present, of one or more polyalkyleneglycol-derived structure units (V), preferably selected from the formula (V-a).

In a more preferred embodiment of the invention the inventive polyesters consist exclusively of one or more structure units of the formula (I), and of one or more structure units of the formula (II), and of one or more structure units selected from the group consisting of the formulae (Illa), (IIIb), (III-c) and combinations thereof, and one or more terminal groups (IV) derived from polyalkyleneglycol monoalkylethers, preferably selected from the formula (IV-a).

The amount of the one or more terminal groups (IV), based on the total weight of the inventive polyester, is preferably at least 40 wt.-%, more preferably at least 50 wt.-%, even more preferably at least 60 wt.-% and particularly preferably at least 70 wt.-%.

Preferably, the weight average molecular weight (Mw) of the inventive polyesters is from 2000 to 20000 g/mol. The weight average molecular weight (Mw) of the inventive polyesters may be determined by GPC analysis, preferably as detailed in the following: 10 µl of sample is injected onto a PSS Suprema column of dimensions 300 x 8 mm with porosity 30 Å and particle size 10 µm. The detection is monitored at 235 nm on a multiple wavelength detector. The employed eluent is 1.25 g/l of disodium hydrogen phosphate in a 45 / 55 % (v/v) water / acetonitrile mixture. Separations are conducted at a flow-rate of 0.8 ml/minute. Quantification is performed by externally calibrating standard samples of different molecular weight polyethylene glycols.

A further subject matter of the invention is inventive "polyesters A" obtainable by reacting the following components:
1.) one or more substances of the formula Q₁-OOC-C₆H₃R₁-COO-Q₂, wherein Q₁ and Q₂, independently of one another, are selected from the group consisting of H and (C₁-C₄)-alkyl and preferably are CH₃ and R₁ has the meaning given above, and preferably is H, and
2.) one or more glycols of the formula HO-R₂-OH, wherein R₂ has the meaning given above, and
3.) one or more amine alkoxylates of the formula H-(O-R₃)ₐ-N(R₅)-(R₄-O)_{b}-H, wherein R₃, R₄, R₅, a and b have the meaning given above,
4.) and one or more polyalkyleneglycol monoalkylethers and preferably one or more polyalkyleneglycol monoalkylethers of the formula HO-[C₂H₄-O]_{c}-[C₃H₆-O]_{d}-[C₄H₈-O]ₑ-R₇, wherein c, d, e and R₇ have the meaning given above,
5.) and optionally one or more polyalkyleneglycols and preferably one or more polyalkyleneglycols of the formula HO-[C₂H₄-O]_{f}-OH, wherein f has the meaning given above,
6.) and optionally subsequently either quaternising the polyesters obtained, preferably with quaternising agents such as dimethylsulfate, or oxidizing the polyesters obtained, preferably with oxidising agents such as hydrogen peroxide H₂O₂.

The preferred meanings for the components to be reacted for obtaining inventive polyesters A can be derived from the preferred respective structure units described above for the polyesters of the invention, such as the preferred meanings for R₁, R₂, R₃, R₄, R₅, a, b, c, d, e, R₇ and f.

Inventive polyesters A obtainable by reacting components 1.), 2.), 3.) and 4.) and optionally subsequently either quaternising the polyesters obtained or oxidizing the polyesters obtained are preferred.

Inventive polyesters A are preferably obtainable using the inventive process described below.

For the preparation of the polyesters of the invention, typically a two-stage process is used of either direct esterification of diacids and diols or transesterification of diesters and diols, followed by a polycondensation reaction under reduced pressure.

A further subject matter of the invention is a process for the preparation of the inventive polyesters, comprising the steps of: heating one or more substances of the formula Q₁-OOC-C₆H₃R₁-COO-Q₂, wherein Q₁ and Q₂, independently of one another, are selected from the group consisting of H and (C₁-C₄)-alkyl and preferably are CH₃ and R₁ has the meaning given above, and preferably is H, and one or more glycols of the formula HO-R₂-OH, wherein R₂ has the meaning given above, and one or more amine alkoxylates of the formula H-(O-R₃)ₐ-N(R₅)-(R₄-O)_{b}-H, wherein R₃, R₄, R₅, a and b have the meaning given above, with the addition of a catalyst, to temperatures of 160 to 220°C, preferably beginning at atmospheric pressure, and then continuing the reaction under reduced pressure at temperatures of from 160 to 240 °C, and one or more polyalkyleneglycol monoalkylethers are employed in the process. Reduced pressure preferably means a pressure of from 0.1 to 900 mbar and more preferably a pressure of from 0.5 to 500 mbar.

Typical transesterification and condensation catalysts known in the art can be used for the inventive process for the preparation of the inventive polyesters, such as antimony, germanium and titanium-based catalysts. Preferably, tetraisopropyl orthotitanate (IPT) and sodium acetate (NaOAc) are used as the catalyst system in the inventive process for the preparation of the polyesters of the invention.

The aforementioned process of the invention using one or more amine alkoxylates of the formula H-(O-R₃)ₐ-N(R₅)-(R₄-O)_{b}-H result in polyesters of the invention that comprise one or more structure units (III-a).

These polyesters can e.g. be quaternised by methods well-known to the person skilled in the art in order to obtain the polyesters of the invention that comprise one or more structure units (III-b), for example with quaternising agents such as dimethylsulfate, or they can be oxidised by methods well-known to the person skilled in the art in order to obtain the polyesters of the invention that comprise one or more structure units (III-c), for example with oxidising agents such as hydrogen peroxide H₂O₂.

In order to obtain polyesters of the invention comprising one or more terminal groups (IV) derived from one or more polyalkyleneglycol monoalkylethers and preferably one or more terminal groups selected from the formula -O-[C₂H₄-O]_{c}-[C₃H₆-O]_{d}-[C₄H₈-O]ₑ-R₇ (IV-a), the respective one or more polyalkyleneglycol monoalkylethers and preferably the respective one or more polyalkyleneglycol monoalkylethers of the formula HO-[C₂H₄-O]_{c}-[C₃H₆-O]_{d}-[C₄H₈-O]ₑ-R₇, wherein c, d, e and R₇ have the meaning given above, are be employed in the inventive process for the preparation of the polyesters of the invention.

In order to obtain polyesters of the invention comprising one or more polyalkyleneglycol-derived structure units (V) and preferably selected from the formula -O-[C₂H₄-O]_{f}- (V-a), the respective one or more polyalkyleneglycols and preferably the respective one or more polyalkyleneglycols of the formula HO-[C₂H₄-O]_{f}-OH, wherein f has the meaning given above, may be employed in the inventive process for the preparation of the polyesters of the invention.

The polyesters of the invention may be used in substance, i.e. as granules, but may also be provided as solutions or dispersions. The latter two exhibit beneficial handling properties and are more easily dosed. Preferably, the solutions or dispersions comprise the polyesters of the invention in an amount of from 25 to 70 weight-% based on the total weight of the solution or dispersion. Suitable solvents for such solutions or dispersions are for example: water, ethanol, propanol, butanol, ethylene glycol, 1,2-propylene glycol, 1,3-propylene glycol, 1,2-butylene glycol, 1,3 butylene glycol, 1,4-butylene glycol, butyl glycol, butyl diglycol and butyl polyglycol. These solvents are preferably used in an amount of from 25 to 75 wt.-% and more preferably in an amount of from 30 to 75 wt.-%, in each case based on the total weight of the solution or dispersion.

A further subject matter of the invention is solutions or dispersions comprising one or more polyesters of the invention, preferably in an amount of from 25 to 70 wt.-%, based on the total weight of the solution or dispersion, and one or more solvents selected from the group consisting of water, ethanol, propanol, butanol, ethylene glycol, 1,2-propylene glycol, 1,3-propylene glycol, 1,2-butylene glycol, 1,3 butylene glycol, 1,4-butylene glycol, butyl glycol, butyl diglycol and butyl polyglycol, preferably in an amount of from 25 to 75 wt.-% and more preferably in an amount of from 30 to 75 wt.-%, in each case based on the total weight of the solution or dispersion.

The groups (C₂H₄) in the structural units (II), (III-a), (III-b), (III-c), (IV-a) or (V-a) (or in groups R₅ and R₆) preferably are of the formula -CH₂-CH₂-.

The groups (C₃H₆) in the structural units (II), (III-a), (III-b), (III-c) or (IV-a) (or in groups R₅ and R₆) preferably are of the formula -CH(CH₃)-CH₂- or -CH₂-CH(CH₃)-, i.e. of the formula:

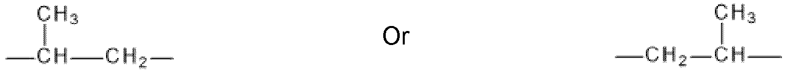

The groups (C₄H₈) in the structural units (II), (III-a), (III-b), (III-c) or (IV-a) (or in groups R₅ and R₆) are preferably of the formula -CH(CH₃)-CH(CH₃)-, i.e. of the formula:

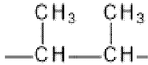

In the polyesters of the invention, the structure units of the formulae (II), (III-a), (III-b), (III-c), (IV-a) or (V-a) may be linked directly to structure units of the formula (I). Ester groups result. However, in the polyesters of the invention, the structure units of the formulae (II), (III-a), (III-b), (III-c), (IV-a) or (V-a) may not be linked directly to one or more other structure units of the formulae (II), (III-a), (III-b), (III-c), (IV-a) or (V-a).

It is to be understood that the polyesters of the invention are typically prepared by polycondensation processes. This leads to statistically determined mixtures of polyesters in which a mixture of molecular species with a distribution around a molar average is obtained.

The following paragraphs will show illustrative, but by no means limiting, structural entities that can be found in the polyesters of the invention.

The structure units of the formula (I) and optional additional di- or polycarboxylic acid-based structures are linked indirectly, preferably via the structure units of the formulae (II), (Illa), (IIIb) or (IIIc), which - in the case of structure units of the formulae (I) and (II) or in the case of the structure units of the formulae (I) and (Illa) - results in the following structural entities: 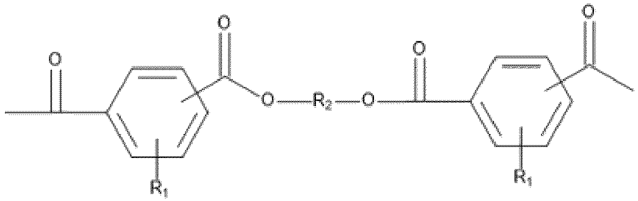 or

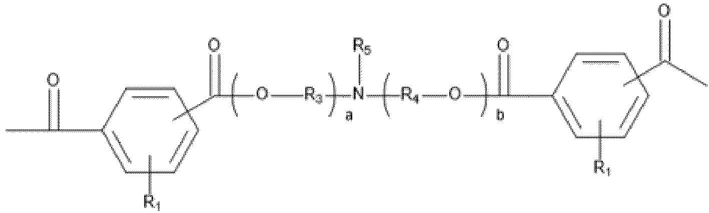

Preferably, the terminal group (IV) is linked to an acyl group derived from a dicarboxylic acid, preferably to the structure unit of the formula (I), which - in the case of structure unit of the formula (IV-a) - results in the following structural entity:

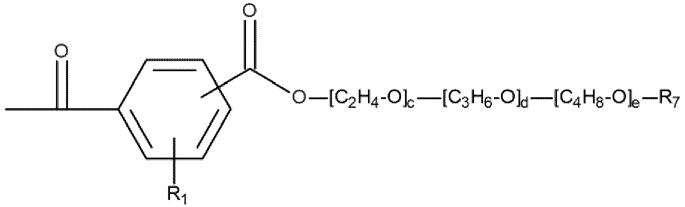

### EXAMPLES

The examples below are intended to illustrate the invention in detail without, however, limiting it thereto. Unless explicitly stated otherwise, all percentages given are percentages by weight (% by wt. or wt.-%).

### Example 1: Polyester preparation

General procedure for the preparation of the polyesters of the examples.

The polyester synthesis is carried out by the reaction of dimethyl terephthalate (DMT), one or more alkylene glycols, one or more amine ethoxylates and one or more alkyl capped polyalkylene glycols, using sodium acetate (NaOAc) and tetraisopropyl orthotitanate (IPT) as the catalyst system. The synthesis is a two-step procedure. The first step is a trans-esterification and the second step is a polycondensation. Subsequently, the obtained polyester can be quaternised or N-oxidised.

Key to reactants used in the examples:
- AES: is alcohol ethoxysulfate
- DMT: is dimethyl terephthalate
- EO: is -CH₂CH₂O- or -OCH₂CH₂-
- Genamin^{®} C 020: is coconut fatty amine ethoxylate with 2 EO (Clariant)
- Genamin^{®} C 050: is coconut fatty amine ethoxylate with 5 EO (Clariant)
- Genamin^{®} C 100: is coconut fatty amine ethoxylate with 10 EO (Clariant)
- Genamin^{®} C 200: is coconut fatty amine ethoxylate with 20 EO (Clariant)
- Genamin^{®} CH 020: is cyclohexylamine ethoxylate with 2 EO (Clariant)
- Genamin^{®} 3920: is caprylamine ethoxylate with 2-4 EO (Clariant)
- IPT: is tetraisopropyl orthotitanate
- LAS: is linear alkyl benzene sulphonate
- MEA: is monoethanolamine
- mPEG750: is mono hydroxyl-functional polyethylene glycol monomethyl ether, average molecular weight 750 Da (Polyglykol M 750, Clariant)
- mPEG1000: is mono hydroxyl-functional polyethylene glycol monomethyl ether, average molecular weight 1 kDa (Polyglykol M 1000, Clariant)
- mPEG2000: is mono hydroxyl-functional polyethylene glycol monomethyl ether, average molecular weight 2 kDa (Polyglykol M 2000, Clariant)
- mPEG3000: is mono hydroxyl-functional polyethylene glycol monomethyl ether, average molecular weight 3 kDa (Polyglykol M 3000, Clariant)
- mPEG4000: is mono hydroxyl-functional polyethylene glycol monomethyl ether, average molecular weight 4 kDa (Polyglykol M 4000, Clariant)
- mPEG5000: is mono hydroxyl-functional polyethylene glycol monomethyl ether, average molecular weight 5 kDa (Polyglykol M 5000, Clariant)
- NaCS: is sodium cumene sulfonate
- Na-DTPA: is sodium salt of diethylenetriamine-pentaacetate
- NaOAc: is sodium acetate
- NBDEA: is N-butyldiethanolamine
- NI 7EO: is nonionic surfactant alkyl alkoxylate with on average 7 EO
- NI 9EO: is nonionic surfactant alkyl alkoxylate with on average 9 EO
- NMDEA: is N-methyldiethanolamine
- PG: is 1,2-propylene glycol
- Texcare^{®} SRN 240: is a nonionic soil release polymer (Clariant)
- Texcare^{®} SRN 260: is a nonionic soil release polymer (Clariant)
- Tinosan HP100: is 30 wt.-% 4.4'-dichloro 2-hydroxydiphenyl ether dissolved in 1,2- propylene glycol
- TSA: is Tryptic Soy agar, purchased from Merck

### Inventive polyester example 1

194 g (1 mol) of Dimethyl terephthalate (DMT), 143 g (1.88 mol) of 1,2-propylene glycol (PG), 71.2 g (0.25 mol) of Genamin^{®} C 020, 456 g (0.23 mol) of mPEG2000 and 1.25 g of sodium acetate (anhydrous) (NaOAc) are weighed into a reaction vessel at room temperature. For the melting process and homogenization, the mixture is heated up to 70°C. 1.65 mmol of tetraisopropyl orthotitanate (IPT) is added and the mixture is further heated up to 170°C for 1 hour and then up to 210°C for a further 1 hour sparged by a nitrogen stream. During the transesterification methanol is released from the reaction and is distilled out of the system (distillation temperature < 55°C). After 2 hours at 210°C nitrogen is switched off and the pressure is reduced to 400 mbar over 3 hours. Subsequently, the mixture is heated up to 230°C. At 230°C, the pressure is reduced to 1 mbar over 160 minutes. Once the polycondensation reaction has started, 1,2-propylene glycol is distilled out of the system. The mixture is stirred for 4 hours at 230°C and a pressure of 1 mbar. The reaction mixture is cooled down to 140 - 150°C. Vacuum is released with nitrogen and the molten polyester is transferred out of the reactor.

### Inventive polyester example 2

103.47 g of polyester example 1 was suspended in 126.1 mL of water at 60°C. To this suspension 10.4 µL (0.0146 mmol) diethylenetriaminepentaacetic acid (DTPA) and 0.2214 g NaHCO₃ (2.6 mmol) were added. Now, 2.52 mL (29.3 mmol, 1.0 eq., based on the amine number of the polyester) H₂O₂ was added dropwise over a period of 30 minutes. The reaction mixture was stirred for 6 hours at 60°C. Based on NMR-analysis additional 2.52 mL H₂O₂ were added dropwise and the reaction mixture was stirred for additional 7 hours at 80°C. After the addition of 0.2232 g NaHCO₃ (2.6 mmol) and further 4 hours at 80°C the reaction mixture was cooled down and transferred out of the vessel.

### Inventive polyester example 3

100.64 g of polyester example 1 was heated to 60°C and 2.65 mL (0.028 mol, 0.98 eq. based on the amine number of the polyester) dimethylsulphate was added dropwise over a period of 10 minutes. The reaction mixture was heated to 80°C and stirred for additional 6 hours. During this period 11.57 g of isopropanol was added to keep the reaction mixture stirrable. After a negative Preussmanntest the reaction mixture was cooled down and the quaternised polyester was transferred out of the vessel.

Inventive polyester examples 4 to 17 are synthesized according to the general procedure as described above for inventive polyester example 1 with monomer type and dosage described below (see Table 1-1).

**Table 1-1 Inventive polyester examples 4 to 17**

| Inventive polyester example | DMT [g] | mPEG [molecu lar weight] | mPEG [g] | PG [g] | amine ethoxylate Type | [g] | IPT [µL] | NaOAc [g] |
|---|---|---|---|---|---|---|---|---|
| 4 | 97 | 2000 | 250 | 62 | Genamin^{®} 3920 | 19 | 200 | 0.50 |
| 5 | 97 | 2000 | 250 | 55 | Genamin^{®} 3920 | 38 | 200 | 0.50 |
| 6 | 97 | 2000 | 250 | 62 | Genamin^{®} CH 020 | 19 | 200 | 0.50 |
| 7 | 31 | 2000 | 72 | 23 | Genamin^{®} C 020 | 5 | 75 | 0.19 |
| 8 | 28 | 2000 | 65 | 20 | Genamin^{®} C 020 | 16 | 75 | 0.19 |
| 9 | 78 | 2000 | 182 | 53 | Genamin^{®} C 020 | 60 | 200 | 0.50 |
| 10 | 28 | 2000 | 66 | 21 | Genamin^{®} C 050 | 15 | 75 | 0.19 |
| 11 | 27 | 2000 | 62 | 19 | Genamin^{®} C 100 | 22 | 75 | 0.19 |
| 12 | 24 | 2000 | 56 | 17 | Genamin^{®} C 200 | 33 | 75 | 0.19 |
| 13 | 30 | 750 | 67 | 22 | Genamin^{®} C 020 | 11 | 75 | 0.19 |
| 14 | 30 | 1000 | 68 | 22 | Genamin^{®} C 020 | 11 | 75 | 0.19 |
| 15 | 29 | 3000 | 69 | 21 | Genamin^{®} C 020 | 11 | 75 | 0.19 |
| 16 | 29 | 4000 | 69 | 21 | Genamin^{®} C 020 | 11 | 75 | 0.19 |
| 17 | 29 | 5000 | 69 | 21 | Genamin^{®} C 020 | 11 | 75 | 0.19 |

Comparative polyester examples 1 to 4 are synthesized according to the general procedure as described above for inventive polyester example 1 with monomer type and dosage described below (see Table 1-2).

**Table 1-2 Comparative polyester examples 1 to 4**

| Comparative polyester | DMT [g] | mPEG [molecular weight] | mPEG [g] | PG [g] | amine ethoxylate Type | [g] | IPT [µL] | NaOAc [g] |
|---|---|---|---|---|---|---|---|---|
| 1 | 31 | 2000 | 73 | 21 | NMDEA | 10 | 75 | 0.19 |
| 2 | 31 | 2000 | 73 | 21 | NBDEA | 13 | 75 | 0.19 |
| 3 | 31 | 2000 | 73 | 23 | NMDEA | 5 | 75 | 0.19 |
| 4 | 31 | 2000 | 73 | 23 | NBDEA | 7 | 75 | 0.19 |

### Example 2: Polyester structure and smell

The structure of the inventive and comparative polyesters of Table 2 below can be described using the following formula.

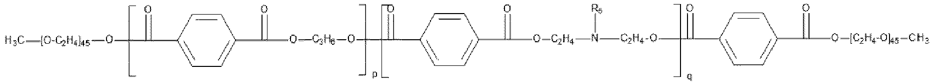

The values of p and q mentioned in Table 2 below are obtained by NMR measurements.

**Table 2 Polyester structures and odour**

| | R₅ | p | q | Polyester odour |
|---|---|---|---|---|
| Comparative polyester 1 | methyl | 5.9 | 1.5 | Strong amine smell |
| Comparative polyester 2 | n-butyl | 4.3 | 3.2 | amine smell |
| Comparative polyester 3 | methyl | 7.0 | 0.6 | Strong amine smell |
| Comparative polyester 4 | n-butyl | 6.2 | 1.5 | amine smell |
| Inventive polyester 9 | cocoyl | 3.5 | 4.0 | No obvious amine smell |
| Inventive polyester 1 | cocoyl | 5.1 | 2.1 | No obvious amine smell |
| Inventive polyester 4 | n-octyl | 5.8 | 1.0 | No obvious amine smell |
| Inventive polyester 6 | cyclohexyl | 5.6 | 1.3 | No obvious amine smell |

It was found that inventive polyesters have no obvious amine smell, which makes them suitable for use in detergent compositions as malodor control polyesters. The comparative polyesters are not suitable for use as malodor control polyesters because of their amine smell.

### Example 3: Method of evaluating malodor and freshness benefit

Malodor and freshness of compositions comprising inventive or comparative polyesters are evaluated using the method described below.

### Step 1: 'strip' wash

The desired range of fabrics for test are sourced from commercial suppliers. On receipt they are 'strip' washed twice to remove finishes applied by the garment/fabric manufacturer. Typically, a detergent which does not contain inventive polyester is used. Example detergent compositions not containing inventive polyester are composition A, composition B and composition C.

### Step 2: Pre-conditioning

After 'strip' washed, the test fabrics are preconditioned for additional 4 cycles using composition comprising inventive polyester and composition not comprising inventive polyester. If the weight of the test fabric is lower than the standard load size of the washing machine, additional ballast may be added into the washing machine and washed together with the test fabrics.

### Step 3: Malodour development

After pre-conditioning, standard size swatches (17.8cm × 17.8cm) are cut from the preconditioned fabrics, and labelled, to provide 2 repetitions. The fabric swatches are then washed together with a series of malodour generation fabrics, including around 2.2kg consumer dirty garment (sourced from consumer), 4 pieces WfK SBL 2004 sheets (sourced from Center for Testmaterials B.V.), 2 pieces 45cm × 45cm CFT PC-S-33 Sebum/Carbon Black (sourced from Center for Testmaterials B.V.) sheets, 6ml Technical (Artificial) Body Soil (sourced from Lubrizol) applied on 10cm × 5cm polycotton fabric. If the weight of the test fabric and malodour generation fabric is lower than the standard load size of the washing machine, additional ballast may be added into the washing machine and washed together with the test fabrics. The test swatches are then left to allow malodour to develop after wash for further panellist assessment.

The fabric swatches with different pre-conditioning are washed all together in a single washing machine, using a detergent which does not contain inventive polyester or other soil release polyester. After wash, the swatches are left overnight in the washing machine, then removed from the washing machine into individual glass jars and stored for additional 3 days before panellist assessment.

### Step 4: malodour and freshness assessment.

The fabric swatches after malodour development are evaluated via a panel of 3 expert human graders, who grade each swatch for malodour intensity on a Monadic scale. The following 0-10 scales are used for malodour assessment (see Table 3-1). Malodour difference versus reference is usually reported. The malodour results given in the tables below are calculated as follows: malodour value of the reference minus malodour value of the sample.

**Table 3-1 Scales used for malodour assessment**

| Scale | Description |
|---|---|
| 0 | No malodor |
| 2 | I think there is malodor |
| 4 | There is definitely malodor |
| 6 | Strong malodor |
| 8 | Very strong malodor |
| 10 | Eye-watery strong malodor |

The freshness is evaluated against a reference using the following scales (see Table 3-2). The freshness results given in the tables below are calculated as follows: freshness value of the sample minus freshness value of the reference.

**Table 3-2 Scales used for freshness evaluation**

| Scale | Description |
|---|---|
| 0 | No difference in freshness |
| +2.5 | Slightly more freshness |
| +5 | Clearly more freshness |
| +7.5 | Very clearly more freshness |

### Example 4. Malodor benefit

### Malodor benefit of inventive polyester versus no polyester:

Liquid detergent composition containing inventive polyester example 1 (composition 1), 2 (composition 2), 3 (composition 3) and liquid detergent composition A comprising no inventive polyester are prepared by means known to those of ordinary skill in the art by mixing the listed ingredients (see Table 4-1).

**Table 4-1 Compositions 1, 2 and 3 comprising inventive polyester and composition A comprising no inventive polyester**

| | Composition 1 [wt.-%] | Composition 2 [wt.-%] | Composition 3 [wt.-%] | Composition A [wt.-%] |
|---|---|---|---|---|
| LAS | 13.4 | 13.4 | 13.4 | 13.4 |
| AES | 9.7 | 9.7 | 9.7 | 9.7 |
| NI 7EO | 6.4 | 6.4 | 6.4 | 6.4 |
| Fatty Acid | 3.0 | 3.0 | 3.0 | 3.0 |
| Citric Acid | 3.7 | 3.7 | 3.7 | 3.7 |
| PEG-PVAc graft polymer¹ | 1.5 | 1.5 | 1.5 | 1.5 |
| Amphiphilic cleaning polymer² | 1.0 | 1.0 | 1.0 | 1.0 |
| Solvents | 12.0 | 12.0 | 12.0 | 12.0 |
| Inventive polyester 1 | 0.2 | - | - | - |
| Inventive polyester 2 | - | 0.2 | - | - |
| Inventive polyester 3 | - | - | 0.2 | - |
| Enzymes³ | 0.06 | 0.06 | 0.06 | 0.06 |
| Perfume | 1.4 | 1.4 | 1.4 | 1.4 |
| Water / minors | Balance | Balance | Balance | Balance |

| | | | | |
|---|---|---|---|---|
| ¹ PEG-PVAc graft polymer is a polyvinyl acetate grafted polyethylene oxide copolymer having polyethylene oxide backbone and multiple polyvinyl acetate side chains. ² bis(HOCH₂CH₂(OCH₂CH₂)ₙ)(CH₃)N⁺-CₓH₂ₓ-N⁺(CH₃)bis((CH₂CH₂O)ₙCH₂CH₂OH), wherein n = from 20 to 30, and x = from 3 to 8, or sulphated or sulphonated variants thereof. ³ Including protease, mannanase, amylase, pectate lyases | | | | |

The malodour and freshness of compositions 1, 2 and 3 (comprising inventive polyester) and composition A (not comprising inventive polyester) were evaluated using the method as described above. The malodour and freshness results are summarized in Table 4-2 below. Clear improvement on malodour and freshness can be observed from inventive polyesters.

**Table 4-2 Malodour and freshness results**

| | fabric | Composition 1 | Composition 2 | Composition 3 | Composition A |
|---|---|---|---|---|---|
| Malodor versus composition A | Cotton | +1.0s | +0.8s | 0 | Reference |
| | Polycotton | +0.8s | +1.8s | +0.2 | Reference |
| | polyester | +0.5 | +0.3s | -0.2 | Reference |
| Freshness versus composition A | Cotton | 0 | 0 | -0.4 | Reference |
| | Polycotton | +2.1s | +4.2s | +0.8s | Reference |
| | Polyester | +1.7s | +2.1s | +1.7s | Reference |

| | | | | | |
|---|---|---|---|---|---|
| s: statistically significant | | | | | |

### Malodor benefit of inventive polymer versus comparative polymer (Texcare^{®} SRN 240)

Liquid detergent composition containing inventive polyester 1 (composition 4) and liquid detergent compositions B and C not comprising inventive polyester are prepared by means known to those of ordinary skill in the art by mixing the listed ingredients (see Table 4-3).

**Table 4-3 Composition 4 comprising inventive polyester and compositions B and C not comprising inventive polyester**

| | Composition 4 [wt.-%] | Composition B [wt.-%] | Composition C [wt.-%] |
|---|---|---|---|
| LAS | 8.5 | 8.5 | 8.5 |
| AES | 5.3 | 5.3 | 5.3 |
| NI 7EO | 2.8 | 2.8 | 2.8 |
| NI 9EO | 1.5 | 1.5 | 1.5 |
| Fatty Acid | 2.9 | 2.9 | 2.9 |
| Citric Acid | 5.5 | 5.5 | 5.5 |
| PEG-PVAc graft polymer¹ | 1.1 | 1.1 | 1.1 |
| Amphiphilic cleaning polymer² | 0.6 | 0.6 | 0.6 |
| Solvents | 5.3 | 5.3 | 5.3 |
| Perfume | 1.4 | 1.4 | 1.4 |
| Enzyme System | 0.1 | 0.1 | 0.1 |
| Inventive polyester 1 | 1.0 | 0 | 0 |
| Texcare^{®} SRN 240 | 0 | 1.0 | 0 |
| Water / minors | balance | Balance | Balance |

| | | | |
|---|---|---|---|
| ¹ PEG-PVAc graft polymer is a polyvinyl acetate grafted polyethylene oxide copolymer having polyethylene oxide backbone and multiple polyvinyl acetate side chains. ² bis(HOCH₂CH₂(OCH₂CH₂)ₙ)(CH₃)N⁺-CₓH₂ₓ-N⁺(CH₃)bis((CH₂CH₂O)ₙCH₂CH₂OH), wherein n = from 20 to 30, and x = from 3 to 8, or sulphated or sulphonated variants thereof. | | | |

The malodour of composition 4 comprising inventive polyester and compositions B and C not comprising inventive polyester was evaluated using the method as described above. The malodour results are summarized in Table 4-4 below. Clear improvement on malodour can be observed from inventive polyester.

**Table 4-4 Malodour results**

| | fabric | Composition 4 | Composition B | Composition C |
|---|---|---|---|---|
| Malodor versus composition C | Polycotton | +1.3 | 0 | Reference |
| | Polyester | +2.0s | +1.25 | Reference |

| | | | | |
|---|---|---|---|---|
| s: statistically significant | | | | |

### Example 5: Soil release performance of inventive polyesters

Liquid detergent compositions containing polyesters of the invention and liquid detergent compositions containing no inventive polyester are prepared by means known to those of ordinary skill in the art by mixing the listed ingredients (see Table 5-1).

**Table 5-1 Compositions comprising inventive or no inventive polyester and used for evaluation of cleaning performance**

| | Detergent with inventive polyester [wt.-%] | Detergent with no polyester [wt.-%] |
|---|---|---|
| LAS | 13.4 | 13.4 |
| AES | 9.7 | 9.7 |
| NI 7EO | 6.4 | 6.4 |
| Fatty Acid | 3.0 | 3.0 |
| Citric Acid | 3.7 | 3.7 |
| Enzymes | 0.06 | 0.06 |
| PEG-PVAc graft polymer¹ | 1.5 | 1.5 |
| Amphiphilic cleaning polymer² | 1.0 | 1.0 |
| Solvents | 12.0 | 12.0 |
| Inventive polyester | 1.0 | 0 |
| Perfume | 1.4 | 1.4 |
| Water / minors | Balance | Balance |

| | | |
|---|---|---|
| ¹ PEG-PVAc graft polymer is a polyvinyl acetate grafted polyethylene oxide copolymer having polyethylene oxide backbone and multiple polyvinyl acetate side chains. ² bis(HOCH₂CH₂(OCH₂CH₂)ₙ)(CH₃)N⁺-CₓH₂ₓ-N⁺(CH₃)bis((CH₂CH₂O)ₙCH₂CH₂OH), wherein n = from 20 to 30, and x = from 3 to 8, or sulphated or sulphonated variants thereof. | | |

The detergent compositions were tested for their soil release performance according to the "Dirty-Motor Oil" Test (DMO-Test) using a Lini Apparatus under the following conditions (see Table 5-2).

**Table 5-2 Conditions for testing of soil release performance**

| | |
|---|---|
| Equipment | Linitest Plus (SDL Atlas) |
| Water hardness | 14°dH |
| Washing temperature | 40°C |
| Washing time | 30 minutes |
| Detergent concentration | 4 g/l liquid detergent |
| Soiled Fabric : Liquor Ratio | 1 : 40 |

As test fabric, white polyester standard swatches (WFK 30A from WFK Testgewebe GmbH) were used. The fabrics were prewashed three times with the liquid detergent compositions. The swatches were then rinsed, dried and soiled with 25 µl of dirty motor oil. After 1 hour the soiled fabrics were washed again with the same stored laundry detergent compositions used in the pre-washing step. After rinsing and drying the washed swatches, a measurement of the remission of the stained fabric at 457 nm was made using a spectrophotometer (Datacolor 650).

The soil release performance is shown as an improvement in soil removal of the swatches washed with a composition containing a polyester of the invention ("with additive") compared with the same composition containing no soil release polyester ("without additive"): $Δ R = {R}_{with additive} - {R}_{without additive}$

The washing results obtained for the laundry detergent compositions comprising the polyesters of the invention are expressed as ΔR along with the standard deviations (SD) (see Table 5-3).

**Table 5-3 Soil release test results**

| Polyester | Soil release test result | |
|---|---|---|
| | *ΔR* | SD |
| Inventive polyester example 1 | 14.6 | 0.9 |
| Inventive polyester example 2 | 16.7 | 0.4 |
| Inventive polyester example 3 | 15.6 | 0.4 |
| Inventive polyester example 4 | 11.8 | 1.6 |
| Inventive polyester example 5 | 22.2 | 1.6 |
| Inventive polyester example 6 | 27.9 | 3.2 |
| Inventive polyester example 7 | 30.6 | 1.9 |
| Inventive polyester example 8 | 16.8 | 4.0 |
| Inventive polyester example 10 | 23.4 | 2.5 |
| Inventive polyester example 11 | 18.5 | 3.2 |
| Inventive polyester example 12 | 17.1 | 2.3 |
| Inventive polyester example 14 | 15.7 | 2.5 |
| Inventive polyester example 17 | 20.7 | 2.8 |

The results suggest that inventive polyesters show very good soil release efficacy (see results in Table 5-3 for inventive polyesters 1-8, 10-12, 14 and 17).

### Example 6: Method of measuring bacteria adhesion

Bacteria adhesion benefits of compositions comprising inventive polyester or comparative polyester are evaluated using the method described below.

### Step 1: Preparation

Detergent solutions for fabric pre-treatment are prepared by adding polyester stock solution comprising inventive polyester or comparative polyester into 1000ppm solution of base detergent in de-ionized (DI) water. Solution of 1000ppm base detergent and 5ppm inventive or comparative polyester are used in this specific test.

### Step 2: pre-treat of fabrics

3 pieces of fabric (1cm disks, polyester or cotton) are sterilized and placed into a 50ml centrifuge tube using sterilized tweezers, then filled with 30ml detergent solutions prepared above. After agitating in the centrifuge for 20 minutes at 40 RPM (rounds per minute), the wash liquor was poured out and replaced with sterile DI water and rinsed for 5 minutes.

The same fabric disks are washed / rinsed following the above process for another 3 times, each time using a freshly made detergent solution prepared following step 1.

### Step 3: Inoculation and Extraction of Bacteria

The treated fabric disks were placed in 12 well microtitre plate (one disk per individual well) and let dry for 1 hour. 20 µl of the 10⁸ cfu/ml bacterial suspension (such as Klebsiella pneumonia) are added into each well that contains a fabric disk and incubated at 32°C for 20 minutes.

Then the fabric disks are washed and rinsed again once following the wash/rinse process described in Step 2, using a freshly made detergent solution prepared following Step 1.

After wash, each fabric disk is moved into labelled vials of neutralizer broth (9ml) and vortex for 30 seconds at speed setting 7 to extract the bacteria into broth. This suspension is labeled as 1X diluted suspension.

Take 1ml of each of above 1X diluted suspension and dilute with another 9ml of neutralizer broth, the diluted suspension is labeled as 2X diluted suspension.

Take 1ml of each of above 2X suspension and dilute with another 9ml of neutralizer broth, the diluted suspension is labeled as 3X diluted suspension.

Pipette 100 µl of each 1X, 2X, 3X diluted suspension onto a 55mm agar plate containing TSA (Tryptic Soy agar, purchased from Merck), thoroughly spread across the plate using a spreader. Incubate the plates overnight at 32°C. Count the number of colonies on each plate, recording "too many too count" (Tmtc) where the mass of bacterial cells have formed a continuous lawn.

### Bacteria adhesion test

Base detergent formulations below are prepared by means known to those of ordinary skill in the art by mixing the listed ingredients for the bacteria adhesion test (see Table 6-1).

**Table 6-1 Base detergent formulation**

| | active [wt.-%] |
|---|---|
| LAS | 10.2 |
| AES | 1.4 |
| NI 7EO | 6.1 |
| C₁₂-C₁₄ alkyl dimethyl amine oxide | 0.5 |
| C₁₂-C₁₈ Fatty Acid | 2.5 |
| Citric acid | 1.2 |
| Ethanol | 1.7 |
| NaCS | 4.4 |
| Na-DTPA | 0.18 |
| Alkoxylated Polyethyleneimine^{a} | 1.1 |
| Alkoxylated Polyethyleneimine^{b} | 0.8 |
| MEA | 1.3 |
| Tinosan HP100 | 0.05 |
| Calcium chloride | 0.03 |
| Perfume | 0.12 |
| Hydrogenated castor oil derivative structurant | 0.12 |
| Water / minors | Balance |

| | |
|---|---|
| ^{a} Polyethylenimine (MW = 600) with 20 ethoxylate groups per -NH on average. ^{b} Polyethylenimine (MW = 600) with 24 ethoxylate groups and 16 propoxylate group per -NH on average. | |

The bacteria adhesion of inventive polyesters and comparative polyester (Texcare^{®} SRN 260) are tested according to the method of this Example. Surprisingly, inventive polyesters provide much better bacteria adhesion prevention benefit versus the comparative polyester. Such bacteria adhesion reduction effect is shown for *Klebsiella pneumoniae* in the following Table 6-2.

**Table 6-2 results of bacteria adhesion tests**

| Polyester | Plate Count (*Klebsiella pneumoniae*) | | |
|---|---|---|---|
| | 1X | 2X | 3X |
| Texcare^{®} SRN260 | Tmtc | Tmtc | Tmtc |
| Inventive polyester 4 | Tmtc | 97 | 7 |
| Inventive polyester 6 | Tmtc | 146 | 17 |
| Inventive polyester 1 | Tmtc | 119 | 15 |
| Inventive polyester 9 | Tmtc | 139 | 24 |

## Claims

1. A polyester comprising
A) one or more structure units of the formula (I) 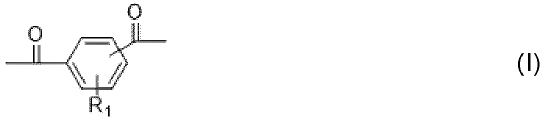 wherein
R₁ is H or SO₃⁻ $\frac{1}{p}$ M^{p+}, and
$\frac{1}{p}$ M^{p+} is a cation, preferably selected from the group consisting of monovalent cations M⁺ (p = 1), divalent cations ½ M²⁺ (p = 2) and trivalent cations $\frac{1}{3}$ M³⁺ (p = 3) and more preferably selected from the group consisting of H⁺, Li⁺, Na⁺, K⁺, ½ Mg²⁺, ½ Ca²⁺, $\frac{1}{3}$ Al³⁺, NH₄⁺ and R^{a}R^{b}R^{c}R^{d}N⁺, wherein R^{a}, R^{b}, R^{c} and R^{d}, independently of one another, are H, linear or branched, preferably linear, (C₁-C₂₂)-alkyl groups or linear or branched, preferably linear, (C₂-C₁₀)-hydroxyalkyl groups, and wherein in the cations R^{a}R^{b}R^{c}R^{d}N⁺ at least one of R^{a}, R^{b}, R^{c} and R^{d} is not H, and
B) one or more structure units of the formula (II)
-O-R₂-O- (II)
wherein
R₂ is a linear or branched alkylene group represented by the formula (CₘH₂ₘ) wherein m is an integer from 2 to 10, preferably from 2 to 6, and more preferably is 2, 3, 4 or 6, and
C) one or more structure units selected from the group consisting of the formulae (III-a), (III-b), (III-c) and combinations thereof, 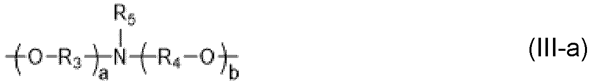 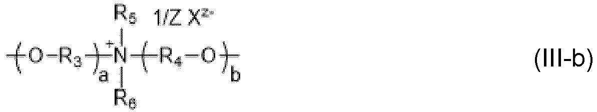 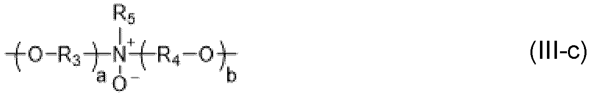 wherein
R₃ and R₄ are, independently of one another, selected from linear or branched alkylene groups represented by the formula (CₙH₂ₙ) wherein n is 2, 3 or 4,
R₅ is a group of the formula -(CⱼH₂ⱼO)ₖ-R₉₈, wherein j is 2, 3 or 4, preferably 2, k is, based on a molar average, a number from 0 to 10, preferably from 0 to 5, more preferably from 0 to 2 and even more preferably is 0, and R₉₈ is selected from the group consisting of alkyl, alkenyl, hydroxyalkyl, hydroxyalkenyl, phenyl alkyl, phenyl alkenyl, alkyl phenyl, and alkenyl phenyl, wherein the alkyl and alkenyl groups, either as such or as a part of the aforementioned hydroxyalkyl, hydroxyalkenyl, phenyl alkyl, phenyl alkenyl, alkyl phenyl or alkenyl phenyl groups, contain 6 or more than 6 carbon atoms, preferably from 6 to 30 carbon atoms and more preferably from 6 to 22 carbon atoms,
R₆ is a group of the formula -(Cⱼ₁H₂ⱼ₁O)ₖ₁-R₉₉, wherein j1 is 2, 3 or 4, preferably 2, k1 is, based on a molar average, a number from 0 to 10, preferably from 0 to 5, more preferably from 0 to 2 and even more preferably is 0, and R₉₉ is selected from the group consisting of hydrogen, alkyl, alkenyl, hydroxyalkyl, hydroxyalkenyl, phenyl alkyl, phenyl alkenyl, alkyl phenyl, and alkenyl phenyl, wherein the alkyl groups, either as such or as a part of the aforementioned hydroxyalkyl, phenyl alkyl or alkyl phenyl groups, contain from 1 to 30 carbon atoms, preferably from 1 to 22 carbon atoms and more preferably from 1 to 6 carbon atoms, and wherein the alkenyl groups, either as such or as a part of the aforementioned hydroxyalkenyl, phenyl alkenyl or alkenyl phenyl groups, contain from 2 to 30 carbon atoms, preferably from 2 to 22 carbon atoms and more preferably from 2 to 6 carbon atoms,
a and b are, based on a molar average, independently of one another, numbers from 1 to 200, preferably from 1 to 100, more preferably from 1 to 50, even more preferably from 1 to 25, and particularly preferably from 1 to 10, and
$\frac{1}{z}$ X^{z-} is an anion, preferably selected from the group consisting of monovalent anions X⁻ (z = 1), divalent anions ½ X²⁻ (z = 2) and trivalent anions $\frac{1}{3}$ X³⁻ (z = 3) and more preferably selected from the group consisting of Cl⁻ (chloride), Br⁻ (bromide), CH₃-SO₄⁻ (methyl sulfate), C₂H₅-SO₄⁻ (ethyl sulfate), HCOO⁻ (formate), $\frac{1}{3}$ C(OH)(COO⁻)(CH₂COO⁻)₂ (citrate), CH₃-COO⁻ (acetate), NO₃⁻ (nitrate), ½ CO₃²⁻ (carbonate), ½ SO₄²⁻ (sulfate) and $\frac{1}{3}$ PO₄³⁻ (phosphate), and
one or more terminal groups (IV) derived from polyalkyleneglycol monoalkylethers.

2. A polyester according to claim 1, **characterized in that** R₁ is H.

3. A polyester according to claim 1 or 2, **characterized in that** R₂ is selected from the group consisting of (C₂H₄), (C₃H₆) and mixtures thereof and preferably is (C₃H₆).

4. A polyester according to one or more of claims 1 to 3, **characterized in that** R₃ and R₄ are (C₂H₄).

5. A polyester according to one or more of claims 1 to 4, **characterized in that** a and b are 1.

6. A polyester according to one or more of claims 1 to 5, **characterized in that** R₉₈ is selected from the group consisting of alkyl, alkenyl and mixtures thereof and wherein the alkenyl groups comprise one or more double bonds, k preferably is 0 and the alkyl and/or alkenyl groups preferably comprise from 6 to 22 carbon atoms.

7. A polyester according to one or more of claims 1 to 6, **characterized in that** R₉₉ is a linear or branched, preferably a linear, alkyl group, preferably containing from 1 to 4 carbon atoms and more preferably is methyl and k1 preferably is 0.

8. A polyester according to one or more of claims 1 to 7, **characterized in that** it comprises one or more terminal groups (IV) derived from polyalkyleneglycol monoalkylethers selected from the formula (IV-a)
-O-[C₂H₄-O]_{c}-[C₃H₆-O]_{d}-[C₄H₈-O]ₑ-R₇ (IV-a)
wherein
R₇ is linear or branched (C₁-C₃₀)-alkyl, preferably linear or branched (C₁-C₄)-alkyl, and more preferably methyl,
c, d and e are, based on a molar average, independently of one another, numbers from 0 to 200, the sum of c+d+e is from 2 to 500, the [C₂H₄-O], [C₃H₆-O] and [C₄H₈-O] groups of the terminal group (IV-a) may be arranged blockwise, alternating, periodically and/or statistically, preferably blockwise and/or statistically, and either of the [C₂H₄-O], [C₃H₆-O] and [C₄H₈-O] groups of the terminal group (IV-a) can be linked to -R₇ and/or -O.

9. A polyester according to one or more of claims 1 to 8, **characterized in that** it further comprises one or more polyalkyleneglycol-derived structure units (V), preferably selected from the formula (V-a)
-O-[C₂H₄-O]_{f}- (V-a)
wherein
f is, based on a molar average, a number from 2 to 500, preferably from 2 to 200, more preferably from 2 to 130, and even more preferably from 10 to 130.

10. A polyester according to one or more of claims 1 to 9, **characterized in that** the combined amount of the one or more structure units of the formula (I), and the one or more structure units of the formula (II), and the one or more structure units selected from the group consisting of the formulae (Illa), (III-b), (III-c) and combinations thereof, and the one or more terminal groups (IV) derived from polyalkyleneglycol monoalkylethers, preferably selected from the formula (IV-a), and, if present, the one or more polyalkyleneglycol-derived structure units (V), preferably selected from the formula (V-a), is at least 50 wt.-%, based on the total weight of the polyester.

11. A polyester according to one or more of claims 1 to 10, **characterized in that** it consists exclusively of one or more structure units of the formula (I), and of one or more structure units of the formula (II), and of one or more structure units selected from the group consisting of the formulae (III-a), (III-b), (III-c) and combinations thereof, and of one or more terminal groups (IV) derived from polyalkyleneglycol monoalkylethers, preferably selected from the formula (IV-a), and, if present, of one or more polyalkyleneglycol-derived structure units (V), preferably selected from the formula (V-a).

12. A polyester according to one or more of claims 1 to 11, **characterized in that** the amount of the one or more terminal groups (IV), based on the total weight of the polyester, is at least 40 wt.-%.

13. A polyester according to one or more of claims 1 to 12, **characterized in that** its weight average molecular weight (Mw) is from 2000 to 20000 g/mol, measured as indicated in the description.

14. A process for the preparation of a polyester according to one or more of claims 1 to 13, **characterized in that** it comprises the steps of: heating one or more substances of the formula Q₁-OOC-C₆H₃R₁-COO-Q₂, wherein Q₁ and Q₂, independently of one another, are selected from the group consisting of H and (C₁-C₄)-alkyl and preferably are CH₃ and R₁ has the meaning given in claims 1 or 2, and preferably is H, and one or more glycols of the formula HO-R₂-OH, wherein R₂ has the meaning given in claims 1 or 3, and one or more amine alkoxylates of the formula H-(O-R₃)ₐ-N(R₅)-(R₄-O)_{b}-H, wherein R₃, R₄, R₅, a and b have the meaning given in claims 1, 4 or 5 or wherein group R₉₈ contained in group R₅ (-(CⱼH₂ⱼO)ₖ-R₉₈, wherein variable k preferably is 0) has the meaning given in claim 6, with the addition of a catalyst, to temperatures of 160 to 220°C, preferably beginning at atmospheric pressure, and then continuing the reaction under reduced pressure at temperatures of from 160 to 240°C, and one or more polyalkyleneglycol monoalkylethers are employed in the process.

15. Solution or dispersion comprising one or more polyesters according to one or more of claims 1 to 13, preferably in an amount of from 25 to 70 wt.-%, based on the total weight of the solution or dispersion, and one or more solvents selected from the group consisting of water, ethanol, propanol, butanol, ethylene glycol, 1,2-propylene glycol, 1,3-propylene glycol, 1,2-butylene glycol, 1,3 butylene glycol, 1,4-butylene glycol, butyl glycol, butyl diglycol and butyl polyglycol, preferably in an amount of from 25 to 75 wt.-% and more preferably in an amount of from 30 to 75 wt.-%, in each case based on the total weight of the solution or dispersion.

## Patentansprüche

1. Polyester umfassend
A) eine oder mehrere Struktureinheiten der Formel (I) 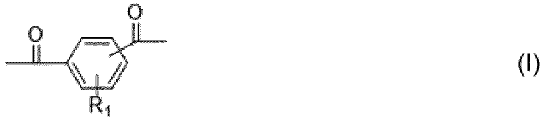 wobei
R₁ H oder SO₃⁻¹/ₚ M^{p+} ist und
$\frac{1}{p}$ M^{p+} ein Kation ist, vorzugsweise ausgewählt aus der Gruppe bestehend aus einwertigen Kationen M⁺ (p = 1), zweiwertigen Kationen ½ M²⁺ (p = 2) und dreiwertigen Kationen⅓ M³⁺ (p = 3) und mehr bevorzugt ausgewählt aus der Gruppe bestehend aus H⁺, Li⁺, Na⁺, K⁺, ½ Mg²⁺, ½ Ca²⁺, $\frac{1}{3}$ Al³⁺, NH₄⁺ und R^{a}R^{b}R^{c}R^{d}N⁺, wobei R^{a}, R^{b}, R^{c} und R^{d}, unabhängig voneinander H, linear oder verzweigt, vorzugsweise linear, (C₁-C₂₂)-Alkylgruppen oder lineare oder verzweigte, vorzugsweise lineare, (C₂-C₁₀)-Hydroxyalkylgruppen sind, und wobei in den Kationen R^{a}R^{b}R^{c}R^{d}N⁺ mindestens eines von R^{a}, R^{b}, R^{c} und R^{d} nicht H ist und
B) eine oder mehrere Struktureinheiten der Formel (II)
-O-R₂-O- (II)
wobei
R₂ eine lineare oder verzweigte Alkylengruppe ist, dargestellt durch die Formel (CₘH₂ₘ), wobei m eine ganze Zahl von 2 bis 10, vorzugsweise von 2 bis 6 ist, und mehr bevorzugt 2, 3, 4 oder 6 ist und
C) eine oder mehrere Struktureinheiten, ausgewählt aus der Gruppe bestehend aus den Formeln (III-a), (III-b), (III-c) und Kombinationen davon, 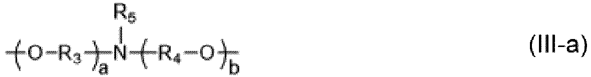 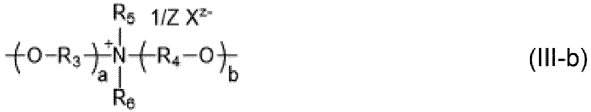 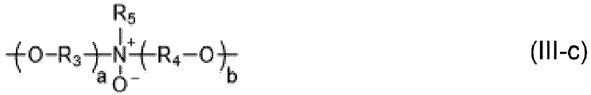 wobei
R₃ und R₄ unabhängig voneinander ausgewählt sind aus einer linearen oder verzweigten Alkylengruppe, dargestellt durch die Formel (CₙH₂ₙ), wobei n 2, 3 oder 4 ist,
R₅ eine Gruppe der Formel -(CⱼH₂ⱼO)ₖ-R₉₈ ist, wobei j 2, 3 oder 4, vorzugsweise 2 ist, k, basierend auf einem molaren Durchschnitt, eine Zahl von 0 bis 10, vorzugsweise von 0 bis 5, mehr bevorzugt von 0 bis 2 ist und noch mehr bevorzugt 0 ist, und R₉₈ ausgewählt ist aus der Gruppe bestehend aus Alkyl, Alkenyl, Hydroxyalkyl, Hydroxyalkenyl, Phenylalkyl, Phenylalkenyl, Alkylphenyl und Alkenylphenyl, wobei die Alkyl- und Alkenylgruppen, entweder als solche oder als Teil der vorher erwähnten Hydroxyalkyl-, Hydroxyalkenyl-, Phenylalkyl-, Phenylalkenyl-, Alkylphenyl- oder Alkenylphenylgruppen, 6 oder mehr als 6 Kohlenstoffatome, vorzugsweise von 6 bis 30 Kohlenstoffatome und mehr bevorzugt von 6 bis 22 Kohlenstoffatome, enthalten,
R₆ eine Gruppe der Formel -(Cⱼ₁H₂ⱼ₁O)ₖ₁-R₉₉ ist, wobei j1 2, 3 oder 4, vorzugsweise 2 ist, k1, bezogen auf einen molaren Durchschnitt, eine Zahl von 0 bis 10, vorzugsweise von 0 bis 5, mehr bevorzugt von 0 bis 2 und noch mehr bevorzugt 0 ist, und R₉₉ ausgewählt ist aus der Gruppe bestehend aus Wasserstoff, Alkyl, Alkenyl, Hydroxyalkyl, Hydroxyalkenyl, Phenylalkyl, Phenylalkenyl, Alkylphenyl und Alkenylphenyl, wobei die Alkylgruppen, entweder als solche oder als Teil der vorher erwähnten Hydroxyalkyl-, Phenylalkyl- oder Alkylphenylgruppen, von 1 bis 30 Kohlenstoffatome, vorzugsweise von 1 bis 22 Kohlenstoffatome und mehr bevorzugt von 1 bis 6 Kohlenstoffatome enthalten, und wobei die Alkenylgruppen, entweder als solche oder als Teil der vorher erwähnten Hydroxyalkenyl-, Phenylalkenyl- oder Alkenylphenylgruppen, von 2 bis 30 Kohlenstoffatome, vorzugsweise von 2 bis 22 Kohlenstoffatome und mehr bevorzugt 2 bis 6 Kohlenstoffatome enthalten,
a und b, bezogen auf einen molaren Durchschnitt, unabhängig voneinander Zahlen von 1 bis 200, vorzugsweise von 1 bis 100, mehr bevorzugt von 1 bis 50, noch mehr bevorzugt von 1 bis 25 und besonders bevorzugt von 1 bis 10 sind, und
$\frac{1}{z}$ X^{z-} ein Anion, vorzugsweise ausgewählt aus der Gruppe bestehend aus einwertigen Anionen X⁻ (z = 1), zweiwertigen Anionen ½ X²⁻ (z = 2) und dreiwertigen Anionen⅓ X³⁻ (z = 3) und mehr bevorzugt ausgewählt aus der Gruppe bestehend aus Cl⁻ (Chlorid), Br⁻ (Bromid), CH₃-SO₄⁻ (Methylsulfat), C₂H₅-SO₄⁻ (Ethylsulfat), HCOO⁻ (Formiat), ⅓ C(OH)(COO⁻)(CH₂COO⁻)₂ (Citrat), CH₃-COO⁻ (Acetat), NO₃⁻ (Nitrat), ½ CO₃²⁻ (Carbonat), ½ SO₄²⁻ (Sulfat) und ⅓ PO₄³⁻ (Phosphat) ist, und
eine oder mehrere endständige Gruppen (IV), abgeleitet von Polyalkylenglycolmonoalkylethern.

2. Polyester nach Anspruch 1, **dadurch gekennzeichnet, dass** R₁ H ist.

3. Polyester nach Anspruch 1 oder 2, **dadurch gekennzeichnet, dass** R₂ ausgewählt ist aus der Gruppe bestehend aus (C₂H₄), (C₃H₆) und Mischungen davon, und vorzugsweise (C₃H₆) ist.

4. Polyester nach einem oder mehreren der Ansprüche 1 bis 3,
**dadurch gekennzeichnet, dass** R₃ und R₄ (C₂H₄) sind.

5. Polyester nach einem oder mehreren der Ansprüche 1 bis 4,
**dadurch gekennzeichnet, dass** a und b 1 sind.

6. Polyester nach einem oder mehreren der Ansprüche 1 bis 5,
**dadurch gekennzeichnet, dass** R₉₈ ausgewählt ist aus der Gruppe bestehend aus Alkyl, Alkenyl und Mischungen davon, und wobei die Alkenylgruppen eine oder mehrere Doppelbindungen umfassen, k vorzugsweise 0 ist und die Alkyl- und/oder Alkenylgruppen vorzugsweise von 6 bis 22 Kohlenstoffatome umfassen.

7. Polyester nach einem oder mehreren der Ansprüche 1 bis 6,
**dadurch gekennzeichnet, dass** R₉₉ eine lineare oder verzweigte, vorzugsweise eine lineare, Alkylgruppe ist, die vorzugsweise von 1 bis 4 Kohlenstoffatome enthält und mehr bevorzugt Methyl ist, und k1 vorzugsweise 0 ist.

8. Polyester nach einem oder mehreren der Ansprüche 1 bis 7,
**dadurch gekennzeichnet, dass** er eine oder mehrere endständige Gruppen (IV) umfasst, abgeleitet von Polyalkylenglycolmonoalkylethern, ausgewählt aus der Formel (IV-a)
-O-[C₂H₄-O]_{c}-[C₃H₆-O]_{d}-[C₄H₈-O]ₑ-R₇ (IV-a)
wobei
R₇ lineares oder verzweigtes (C₁-C₃₀)-Alkyl, vorzugsweise lineares oder verzweigtes (C₁-C₄)-Alkyl, und mehr bevorzugt Methyl ist,
c, d und e, bezogen auf einen molaren Durchschnitt, unabhängig voneinander Zahlen von 0 bis 200 sind, wobei die Summe aus c+d+e von 2 bis 500 beträgt, die [C₂H₄-O]-, [C₃H₆-O]- und [C₄H₈-O]-Gruppen der endständigen Gruppe (IV-a) blockweise, abwechselnd, periodisch und/oder statistisch, vorzugsweise blockweise und/oder statistisch, angeordnet sein können, und jede der [C₂H₄-O]-, [C₃H₆-O]- und [C₄H₈-O]-Gruppen der endständigen Gruppe (IV-a) mit -R₇ und/oder -O verknüpft sein können.

9. Polyester nach einem oder mehreren der Ansprüche 1 bis 8,
**dadurch gekennzeichnet, dass** er ferner eine oder mehrere von Polyalkylenglycol abgeleitete Struktureinheiten (V) umfasst, vorzugsweise ausgewählt aus der Formel (V-a)
-O-[C₂H₄-O]_{f}- (V-a)
wobei
f, bezogen auf einen molaren Durchschnitt, von 2 bis 500, vorzugsweise von 2 bis 200, mehr bevorzugt von 2 bis 130 und noch mehr bevorzugt von 10 bis 130 beträgt.

10. Polyester nach einem oder mehreren der Ansprüche 1 bis 9,
**dadurch gekennzeichnet, dass** die kombinierte Menge der einen oder mehreren Struktureinheiten der Formel (I) und der einen oder mehreren Struktureinheiten der Formel (II) und der einen oder mehreren Struktureinheiten, ausgewählt aus der Gruppe bestehend aus den Formeln (IIIa), (III-b), (III-c) und Kombinationen davon, und der einen oder mehreren Endgruppen (IV), abgeleitet von Polyalkylenglycolmonoalkylethern, vorzugsweise ausgewählt aus der Formel (IVa), und, falls vorhanden, der einen oder mehreren von Polyalkylenglycol abgeleiteten Struktureinheiten (V), vorzugsweise ausgewählt aus der Formel (V-a), mindestens 50 Gew.-%, bezogen auf das Gesamtgewicht des Polyesters, beträgt.

11. Polyester nach einem oder mehreren der Ansprüche 1 bis 10,
**dadurch gekennzeichnet, dass** er ausschließlich aus einer oder mehreren Struktureinheiten der Formel (I) und aus einer oder mehreren Struktureinheiten der Formel (II) und aus einer oder mehreren Struktureinheiten, ausgewählt aus der Gruppe bestehend aus den Formeln (III-a), (III-b), (III-c) und Kombinationen davon, und aus einer oder mehreren endständigen Gruppen (IV), abgeleitet von Polyalkylenglycolmonoalkylethern, vorzugsweise ausgewählt aus der Formel (IVa), und, falls vorhanden, aus einer oder mehreren von Polyalkylenglycol abgeleiteten Struktureinheiten (V), vorzugsweise ausgewählt aus der Formel (V-a), besteht.

12. Polyester nach einem oder mehreren der Ansprüche 1 bis 11,
**dadurch gekennzeichnet ist, dass** die Menge der einen oder der mehreren endständigen Gruppen (IV), bezogen auf das Gesamtgewicht des Polymers, mindestens 40 Gew.-% beträgt.

13. Polyester nach einem oder mehreren der Ansprüche 1 bis 12,
**dadurch gekennzeichnet, dass** sein durchschnittliches Molekulargewicht (Gewichtsmittel) von 2000 bis 20000 g/mol beträgt, gemessen wie in der Beschreibung angegeben.

14. Verfahren zum Herstellen eines Polyesters nach einem oder mehreren der Ansprüche 1 bis 13, **dadurch gekennzeichnet, dass** es die Schritte umfasst: Erhitzen einer oder mehrerer Substanzen der Formel Q₁-OOC-C₆H₃R₁-COO-Q₂, wobei Q₁ und Q₂ unabhängig voneinander aus der Gruppe ausgewählt sind bestehend aus H und (C₁-C₄)-Alkyl und vorzugsweise CH₃ sind und R₁ die in den Ansprüchen 1 oder 2 gegebene Bedeutung aufweist und vorzugsweise H ist, und einem oder mehreren Glycolen der Formel HO-R₂-OH, wobei R₂ die in Anspruch 1 oder 3 gegebene Bedeutung und ein oder mehrere Aminalkoxylate der Formel H-(O-R₃)ₐ-N(R₅)-(R₄-O)_{b}-H aufweist, wobei R₃, R₄, R₅, a und b die in den Ansprüchen 1, 4 oder 5 gegebene Bedeutung aufweisen oder wobei die Gruppe R₉₈ in der Gruppe R₅ (-(CⱼH₂ⱼO)ₖ-R₉₈ enthalten ist, wobei die Variable k vorzugsweise 0) ist, die in Anspruch 6 gegebene Bedeutung aufweist, mit dem Zusatz eines Katalysators auf Temperaturen von 160 bis 220 °C, vorzugsweise beginnend bei Atmosphärendruck, und dann Fortsetzen der Umsetzung unter vermindertem Druck bei Temperaturen von 160 bis 240 °C, und ein oder mehrere Polyalkylenglycolmonoalkylether in dem Verfahren eingesetzt werden.

15. Lösung oder Dispersion, umfassend einen oder mehrere Polyester nach einem oder mehreren der Ansprüche 1 bis 13, vorzugsweise in einer Menge von 25 bis 70 Gew.-%, bezogen auf das Gesamtgewicht der Lösung oder Dispersion, und ein oder mehrere Lösungsmittel, ausgewählt aus der Gruppe bestehend aus Wasser, Ethanol, Propanol, Butanol, Ethylenglycol, 1,2-Propylenglycol, 1,3-Propylenglycol, 1,2-Butylenglycol, 1,3-Butylenglycol, 1,4-Butylenglycol, Butylglycol, Butyldiglycol und Butylpolyglycol, vorzugsweise in einer Menge von 25 bis 75 Gew.-% und mehr bevorzugt in einer Menge von 30 bis 75 Gew.-%, in jedem Fall bezogen auf das Gesamtgewicht der Lösung oder Dispersion.

## Revendications

1. Polyester comprenant
A) un ou plusieurs motifs structurels de la formule (I), 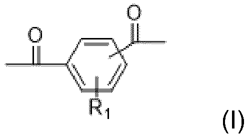 dans laquelle
R₁ est H ou SO₃^{- 1}/ₚ M^{p+}, et
¹/ₚ M^{p+} est un cation, choisi de préférence dans le groupe constitué de cations monovalents M⁺ (p = 1), cations divalents ½ M²⁺ (p = 2) et cations trivalents ¹/₃ M³⁺ (p = 3) et plus préférablement choisi dans le groupe constitué de H⁺, Li⁺, Na⁺, K⁺, ½ Mg²⁺, ½ Ca²⁺, ¹/₃ Al³⁺, NH₄⁺ et R^{a}R^{b}R^{c}R^{d}N⁺, dans laquelle R^{a}, R^{b}, R^{c} et R^{d}, indépendamment les uns des autres, sont H, linéaires ou ramifiés, de préférence linéaires, des groupes alkyle en (C₁ à C₂₂) ou linéaires ou ramifiés, de préférence linéaires, des groupes hydroxyalkyle en (C₂ à C₁₀), et dans laquelle dans les cations R^{a}R^{b}R^{c}R^{d}N⁺ au moins l'un de R^{a}, R^{b}, R^{c} et R^{d} n'est pas H, et
B) un ou plusieurs motifs structurels de la formule (II)
-O-R₂-O- (II)
dans laquelle
R₂ est un groupe alkylène linéaire ou ramifié représenté par la formule (CₘH₂ₘ) dans laquelle m est un nombre entier allant de 2 à 10, de préférence de 2 à 6, et plus préférablement vaut 2, 3, 4 ou 6, et
C) un ou plusieurs motifs structurels choisis dans le groupe constitué des formules (III-a), (III-b), (III-c) et combinaisons de celles-ci, 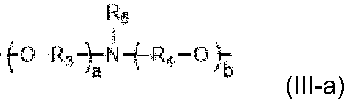 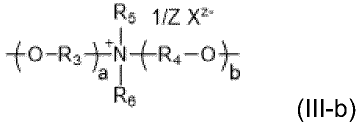 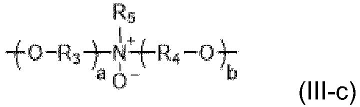 dans lesquelles
R₃ et R₄ sont, indépendamment l'un de l'autre, choisis parmi un groupe alkylène linéaire ou ramifié représenté par la formule (CₙH₂ₙ), dans laquelle n vaut 2, 3 ou 4 ;
R₅ est un groupe de la formule -(CⱼH₂ⱼO)ₖ-R₉₈, dans laquelle j vaut 2, 3 ou 4, de préférence 2, k est, sur la base d'une moyenne molaire, un nombre allant de 0 à 10, de préférence de 0 à 5, plus préférablement de 0 à 2 et encore plus préférablement est 0, et R₉₈ est choisi dans le groupe constitué d'alkyle, alcényle, hydroxyalkyle, hydroxyalcényle, phénylalkyle, phénylalcényle, alkylphényle et alcénylphényle, dans laquelle les groupes alkyle et alcényle, soit tels quels, soit en tant que partie des groupes hydroxyalkyle, hydroxyalcényle, phénylalkyle, phényl-alcényle, alkyl-phényle ou alcényl-phényle susmentionnés, contiennent 6 atomes de carbone ou plus, de préférence de 6 à 30 atomes de carbone et, plus préférablement, de 6 à 22 atomes de carbone,
R₆ est un groupe de la formule -(Cⱼ₁H₂ⱼ₁O)ₖ₁-R₉₉, dans laquelle j1 vaut 2, 3 ou 4, de préférence 2, k1 est, sur la base d'une moyenne molaire, un nombre allant de 0 à 10, de préférence de 0 à 5, plus préférablement de 0 à 2 et encore plus préférablement est 0, et R₉₉ est choisi dans le groupe constitué d'hydrogène, alkyle, alcényle, hydroxyalkyle, hydroxyalcényle, phénylalkyle, phénylalcényle, alkylphényle et alcénylphényle, dans laquelle les groupes alkyle, soit tels quels, soit en tant que partie des groupes hydroxyalkyle, phénylalkyle ou alkylphényle susmentionnés, contiennent de 1 à 30 atomes de carbone, de préférence de 1 à 22 atomes de carbone et, plus préférablement, de 1 à 6 atomes de carbone, et dans laquelle les groupes alcényle, soit tels quels, soit en tant que partie des groupes hydroxyalcényle, phényl-alcényle ou alcényl-phényle susmentionnés, contiennent de 2 à 30 atomes de carbone, de préférence de 2 à 22 atomes de carbone et, plus préférablement, de 2 à 6 atomes de carbone,
a et b sont, sur la base d'une moyenne molaire, indépendamment l'un de l'autre, des nombres allant de 1 à 200, de préférence de 1 à 100, plus préférablement de 1 à 50, encore plus préférablement de 1 à 25, et particulièrement préférablement de 1 à 10, et
¹/_{z} X^{z-} est un anion, choisi de préférence dans le groupe constitué d'anions monovalents X⁻ (z = 1), anions divalents ½ X²⁻ (z = 2) et anions trivalents ¹/₃ X³⁻ (z = 3) et plus préférablement choisi dans le groupe constitué de Cl⁻ (chlorure), Br⁻ (bromure), CH₃-SO₄ (méthyle sulfate), C₂H₅-SO₄⁻ (éthyle sulfate), HCOO⁻ (formiate), ¹/₃ C(OH)(COO⁻)(CH₂COO⁻)₂ (citrate), CH₃-COO⁻ (acétate), NO₃⁻ (nitrate), ½ CO₃²⁻ (carbonate), ½ SO₄²⁻ (sulfate) et ¹/₃ PO₄³⁻ (phosphate), et
un ou plusieurs groupes terminaux (IV) dérivés de monoalkyléthers de polyalkylèneglycol.

2. Polyester selon la revendication 1, **caractérisé en ce que** R₁ est H.

3. Polyester selon la revendication 1 ou 2, **caractérisé en ce que** R₂ est choisi dans le groupe constitué de (C₂H₄), (C₃H₆) et mélanges de ceux-ci et de préférence est (C₃H₆).

4. Polyester selon l'une ou plusieurs des revendications 1 à 3,
**caractérisé en ce que** R₃ et R₄ sont (C₂H₄).

5. Polyester selon l'une ou plusieurs des revendications 1 à 4,
**caractérisé en ce que** a et b valent 1.

6. Polyester selon l'une ou plusieurs des revendications 1 à 5,
**caractérisé en ce que** R₉₈ est choisi dans le groupe constitué d'alkyle, alcényle et mélanges de ceux-ci et dans lequel les groupes alcényle comprennent une ou plusieurs doubles liaisons, k vaut de préférence 0 et les groupes alkyle et/ou alcényle comprennent de préférence de 6 à 22 atomes de carbone.

7. Polyester selon l'une ou plusieurs des revendications 1 à 6,
**caractérisé en ce que** R₉₉ est un groupe alkyle linéaire ou ramifié, de préférence linéaire, contenant de préférence de 1 à 4 atomes de carbone et plus préférablement est méthyle et k1 vaut de préférence 0.

8. Polyester selon l'une ou plusieurs des revendications 1 à 7,
**caractérisé en ce qu'**il comprend un ou plusieurs groupes terminaux (IV) dérivés de monoalkyléthers de polyalkylène glycol choisis dans la formule (IV-a)
-O-[C₂H₄-O]_{c}-[C₃H₆-O]_{d}-[C₄H₈-O]ₑ-R₇ (IV-a)
dans laquelle
R₇ est alkyle en (C₁-C₃₀) linéaire ou ramifié, de préférence alkyle en (C₁-C₄) linéaire ou ramifié, et plus préférablement méthyle,
c, d et e sont, sur la base d'une moyenne molaire, indépendamment les uns des autres, des nombres compris entre 0 et 200, la somme c+d+e est comprise entre 2 et 500, dans laquelle les groupes [C₂H₄-O], [C₃H₆-O] et [C₄H₈-O] du groupe terminal (IV-a) peuvent être agencés de manière séquentielle, alternée, périodique et/ou statistique, de préférence séquentielle et/ou statistique, l'un ou l'autre des groupes [C₂H₄-O], [C₃H₆-O] et [C₄H₈-O] du groupe terminal (IV-a) peuvent être liés à -R₇ et/ou -O.

9. Polyester selon l'une ou plusieurs des revendications 1 à 8,
**caractérisé en ce qu'**il comprend en outre un ou plusieurs motifs structurels dérivés de polyalkylèneglycol (V), de préférence choisis à partir de la formule (V-a)
-O-[C₂H₄-O]_{f}- (V-a)
dans laquelle
f est, sur la base d'une moyenne molaire, un nombre allant de 2 à 500, de préférence de 2 à 200, plus préférablement de 2 à 130, et encore plus préférablement de 10 à 130.

10. Polyester selon l'une ou plusieurs des revendications 1 à 9,
**caractérisé en ce que** la quantité combinée du ou des motifs structurels de la formule (I), et du ou des motifs structurels de la formule (II), et du ou des motifs structurels choisis dans le groupe constitué des formules (IIIa), (III-b), (III-c) et combinaisons de celles-ci, et du ou des groupes terminaux (IV) dérivés de monoalkyléthers de polyalkylèneglycol, de préférence choisis à partir de la formule (IV-a), et, s'ils sont présents, le ou les motifs structurels dérivés de polyalkylène glycol (V), choisis de préférence à partir de la formule (V-a), est d'au moins 50 % en poids, sur la base du poids total du polyester.

11. Polyester selon l'une ou plusieurs des revendications 1 à 10,
**caractérisé en ce qu'**il est constitué exclusivement d'un ou plusieurs motifs structurels de la formule (I), et d'un ou plusieurs motifs structurels de la formule (II), et d'un ou plusieurs motifs structurels choisis dans le groupe constitué des formules (III-a), (III-b), (III-c) et combinaisons de celles-ci, et d'un ou plusieurs groupes terminaux (IV) dérivés de monoalkyléthers de polyalkylène glycol, de préférence choisis à partir de la formule (IV-a), et, s'ils sont présents, d'un ou plusieurs motifs structurels dérivés de polyalkylène glycol (V), de préférence choisis à partir de la formule (V-a).

12. Polyester selon l'une ou plusieurs des revendications 1 à 11,
**caractérisé en ce que** la quantité du ou des groupes terminaux (IV), sur la base du poids total du polyester, est d'au moins 40 % en poids.

13. Polyester selon l'une ou plusieurs des revendications 1 à 12,
**caractérisé en ce que** sa masse moléculaire moyenne en poids (Mw) va de 2 000 à 20 000 g/mol, mesurée comme indiqué dans la description.

14. Procédé destiné à la préparation d'un polyester selon une ou plusieurs des revendications 1 à 13, **caractérisé en ce qu'**il comprend les étapes consistant à : chauffer une ou plusieurs substances de la formule Q₁-OOC-C₆H₃R₁-COO-Q₂, dans laquelle Q₁ et Q₂, indépendamment l'un de l'autre, sont choisis dans le groupe constitué de H et alkyle en (C₁-C₄)-alkyle et sont de préférence CH₃ et R₁ a la signification donnée dans les revendications 1 ou 2, et de préférence est H, et un ou plusieurs glycols de la formule HO-R₂-OH, dans laquelle R₂ a la signification donnée dans les revendications 1 ou 3, et un ou plusieurs alcoxylates d'amine de la formule H-(O-R₃)ₐ-N(R₅)-(R₄-O)_{b}-H, dans laquelle R₃, R₄, R₅, a et b ont le sens donné dans les revendications 1, 4 ou 5 ou dans laquelle R₉₈ est contenu dans le groupe R₅(-(CⱼH₂ⱼO)ₖ-R₉₈, dans laquelle la variable k vaut de préférence 0) a la signification donnée dans la revendication 6, avec l'ajout d'un catalyseur, à des températures de 160 à 220 °C, de préférence en commençant à pression atmosphérique, puis en poursuivant la réaction sous pression réduite à des températures allant de 160 à 240 °C, et un ou plusieurs monoalkyléthers de polyalkylèneglycol sont utilisés dans le procédé.

15. Solution ou dispersion comprenant un ou plusieurs polyesters selon l'une ou plusieurs des revendications 1 à 13, de préférence en une quantité allant de 25 à 70 % en poids, en fonction du poids total de la solution ou de la dispersion, et un ou plusieurs solvants choisis dans le groupe constitué d'eau, éthanol, propanol, butanol, éthylène glycol, 1,2-propylène glycol, 1,3-propylène glycol, 1,2-butylène glycol, 1,3 butylène glycol, 1,4-butylène glycol, butyle glycol, butyle diglycol et butyle polyglycol, de préférence en une quantité allant de 25 à 75 % en poids et plus préférablement en une quantité allant de 30 à 75 % en poids, dans chaque cas sur la base du poids total de la solution ou de la dispersion.
